# EUROPEAN PATENT APPLICATION

(11) **EP 4 830 899 A1**
(43) Date of publication of application: **28.10.2026**
(21) Application number: 26162783.0
(22) Date of filing: 06.03.2026
(51) Int. Cl.: B29C 53/04, B29C 70/34, B29C 70/42, B29C 70/54, B29D 99/00, B32B 37/00, D06B 23/02

(54) **ROLLER COMPACTORS**

(30) Priority: 23.04.2025 US 202519187707
(71) Applicant: The Boeing Company, Arlington, VA 22202 (US)
(72) Inventor: Duncan, Edward R., ARLINGTON, 22202 (US); Velasquez, Luis F., ARLINGTON, 22202 (US)
(74) Representative: Arnold & Siedsma

(57) **Abstract**

A roller compactor and methods of controlling compaction of a composite material are presented. A roller compactor comprises a first portion of a compaction surface formed of a first material; and a second portion of the compaction surface formed of a second material having a lower hardness than the first material, wherein the second portion is configured to selectively reduce compaction pressure by the second portion of the compaction surface.

## Description

### Field

The present disclosure relates generally to composite manufacturing and more specifically to compacting composite material.

### Background

A composite structure is typically formed by placing plies or layers of composite material on a forming tool that sets forth the shape and/or contour of the composite structure. Once placed, composite material is then consolidated and/or cured to form the composite structure. However, known techniques for transporting a composite material to a forming tool, placing a composite material on a forming tool, and consolidating a composite material on a forming tool may be labor-intensive and time-consuming. Additionally, depending upon the degree of contour and geometry of the composite structure, special handling may be used to prevent introduction of wrinkles or other inconsistencies during transfer and placement of the composite material.

Therefore, it would be desirable to have a method and apparatus that takes into account at least some of the issues discussed above, as well as other possible issues.

### SUMMARY

An example of the present disclosure provides a roller compactor. The roller compactor comprises a first portion of a compaction surface formed of a first material; and a second portion of the compaction surface formed of a second material having a lower hardness than the first material, wherein the second portion is configured to selectively reduce compaction pressure by the second portion of the compaction surface.

The roller compactor may further comprise that the compaction surface is complementary to a cross-sectional shape of a composite member and/or to a forming surface of a forming tool. The roller compactor may further comprise that the second portion is selected to reduce compaction inconsistencies in a composite material compacted by rolling the roller compactor over the composite material, wherein the second portion is preferably selected to locally relax compaction outside of a concave radius of a cross-sectional shape of the composite material to intensify compaction in the concave radius. The roller compactor may further comprise that the first portion of the compaction surface comprises web forming surfaces, and wherein the second portion of the compaction surface comprises a cap forming surface, wherein preferably a size and a shape of the cap forming surface are configured to reduce bridging in an elongate composite member and/or wherein preferably a roller body comprises a trapezoidal cross-sectional shape including the web forming surfaces and the cap forming surface and/or wherein the roller compactor further comprising radiuses between the web forming surfaces and the cap forming surface, wherein the radiuses are formed of the first material. The roller compactor may further comprise adhesive between the first material and the second material and/or wherein the second material is restrained against the first material by friction and/or wherein the roller compactor may further comprise protrusions formed of the first material and channels in the second material positioned over the protrusions to secure the second material to the first material and/or wherein the first material and the second material are configured to provide sufficient friction with a composite material being compacted to passively roll the roller compactor about a rotational shaft.

Another example of the present disclosure provides a method of compacting a composite material. A roller compactor is rolled along a compaction path such that a compaction surface of the roller compactor is in contact with a composite material, the compaction surface comprising a first portion formed of a first material and a second portion formed of a second material having a lower hardness than the first material. A reduced compaction pressure is applied to the composite material by the second portion of the compaction surface. The method may further comprise that applying the reduced compaction pressure to the composite material comprises applying a reduced compaction pressure between radiuses of a cross-sectional shape of the composite material. The method may further comprise identifying a first region of a cross-sectional shape of an elongate composite member to receive a higher compaction pressure, and forming the first portion of the compaction surface configured to contact the first region of the cross-sectional shape out of the first material. In addition or as an alternative the method may further comprise identifying a second region of a cross-sectional shape of an elongate composite member to receive the reduced compaction pressure, and forming the second portion of the compaction surface using the second material wherein the second portion of the compaction surface is configured to contact the second region of the cross-section.

Yet another example of the present disclosure provides a method of controlling compaction pressure of a roller compactor. A first portion of a compaction surface of the roller compactor is formed from a first material. A second portion of the compaction surface of the roller compactor is formed from a second material having a lower hardness than the first material. The method may further comprise compacting an elongate composite member using the roller compactor, wherein compacting comprises applying a compaction pressure by the first material and applying a reduced compaction pressure by the second material. The method may further comprise that forming the second portion of the compaction surface comprises applying the second material over the first material, wherein optionally further comprises adhering the second material to the first material using an adhesive. In addition or as an alternative the method may further comprise that forming the second portion of the compaction surface further comprises forming mechanical connections between mechanical connectors of the first material and the second material. The method may further comprise that forming the first portion of the compaction surface comprises three-dimensionally printing the first portion of the compaction surface of the first material, and wherein forming the second portion of the compaction surface comprises three-dimensionally printing the second portion of the compaction surface of the second material.

Yet another example of the present disclosure provides a method of compacting a composite material and controlling compaction pressure of a roller compactor, comprising at least part of the methods of the preceding two examples. In other words, a method of compacting a composite material and controlling compaction pressure of a roller compactor may comprise at least part of the method steps of the method of compacting a composite material and the method of controlling compaction pressure of a roller compactor as described above.

In a further example of a method of compacting a composite material such method further comprises the step of controlling compaction pressure of a roller compactor as described above. Optionally, such method further comprises one or more of the steps as described above. The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figures 2A** **and** **2B** are an illustration of a block diagram of a manufacturing environment in accordance with an illustrative example;
**Figures 3A** **and** **3B** are illustrations of a block diagram of a manufacturing environment in accordance with an illustrative example;
**Figure 4** is an illustration of an isometric view of a compactor in accordance with an illustrative example;
**Figure 5** is an illustration of a cross-sectional view of a compactor in accordance with an illustrative example;
**Figure 6** is an illustration of an isometric view of a compactor in accordance with an illustrative example;
**Figure 7** is an illustration of an isometric view of a compactor in accordance with an illustrative example;
**Figure 8** is an illustration of an isometric view of a compactor in accordance with an illustrative example;
**Figure 9** is an illustration of a cross-sectional view of an elongate composite member that can be compacted by a compactor in accordance with an illustrative example;
**Figure 10** is an illustration of a simplified side view of a compactor in accordance with an illustrative example;
**Figure 11** is a flowchart of a method of compacting a composite material in accordance with an illustrative example;
**Figure 12** is a flowchart of a method of controlling compaction pressure of a roller compactor in accordance with an illustrative example;
**Figure 13** is a flowchart of a method of compacting a composite material in accordance with an illustrative example;
**Figure 14** is a flowchart of a method of compacting a composite material in accordance with an illustrative example;
**Figure 15** is a flowchart of a method of selectively forming wrinkles in a composite material during forming in accordance with an illustrative example;
**Figure 16** is an illustration of an aircraft manufacturing and service method in a form of a block diagram in accordance with an illustrative example; and
**Figure 17** is an illustration of an aircraft in a form of a block diagram in which an illustrative example may be implemented.

### DETAILED DESCRIPTION

The illustrative examples recognize and take into account several considerations. The illustrative examples recognize and take into account that current manufacturing for elongate composite members comprises manual placement of the elongate composite member into forming and cure tool by operators. The illustrative examples recognize and take into account that currently elongate composite members are compacted against the forming and cure tool using vacuum compaction. The illustrative examples recognize and take into account that currently unique elongate compactors are used for each elongate composite member cross-section. The illustrative examples recognize and take into account that currently unique elongate compactors are used for each elongate composite member.

The illustrative examples recognize and take into account that currently used vacuum compactors may utilize additional compaction supplied by another operator or component. The illustrative examples provide a rolling compaction end effector for a contour forming sequence. The illustrative examples provide a rolling compaction end effector configured to provide sufficient continuous compaction during the process. The illustrative examples provide a rolling compaction end effector that can be used to progressively seat the elongate composite member into place and compact the elongate composite member.

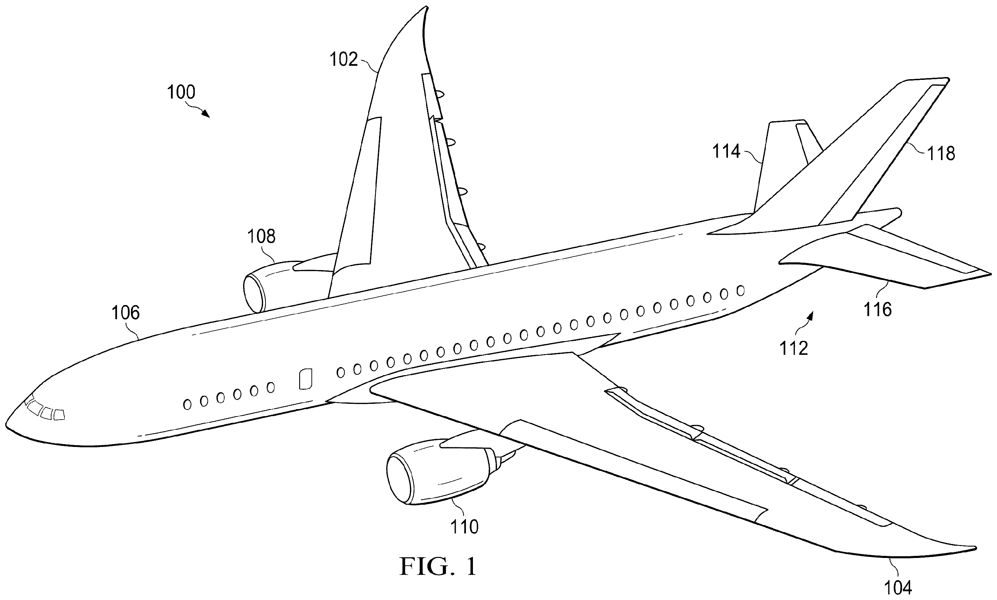

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have elongate composite structures compacted using a roller compactor of the illustrative examples. A composite stiffener of at least one of wing **102,** wing **104,** or body **106** can be compacted by a roller compactor of the illustrative examples.

Although the illustrative examples are described with respect to an aircraft, an illustrative example may be applied to other types of platforms. The platform may be, for example, a mobile platform, a stationary platform, a land-based structure, an aquatic-based structure, or a space-based structure. More specifically, the platform, may be a surface ship, a tank, a personnel carrier, a train, a spacecraft, a space station, a satellite, a submarine, an automobile, a power plant, a house, a manufacturing facility, a building, a refinery, a chemical containment unit, fuel tank, passenger cabin, or other suitable platforms.

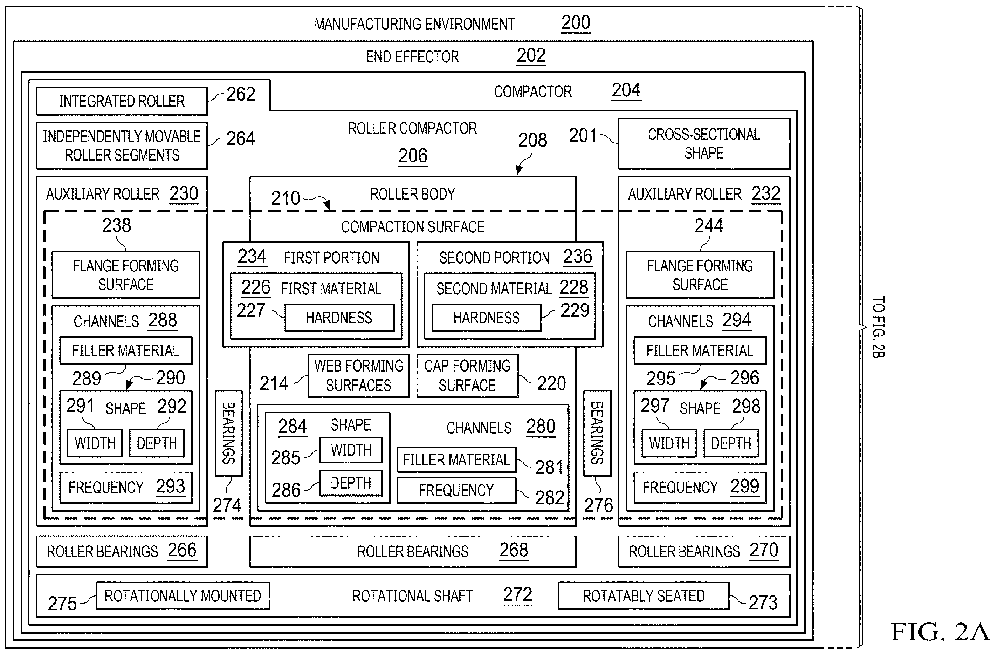

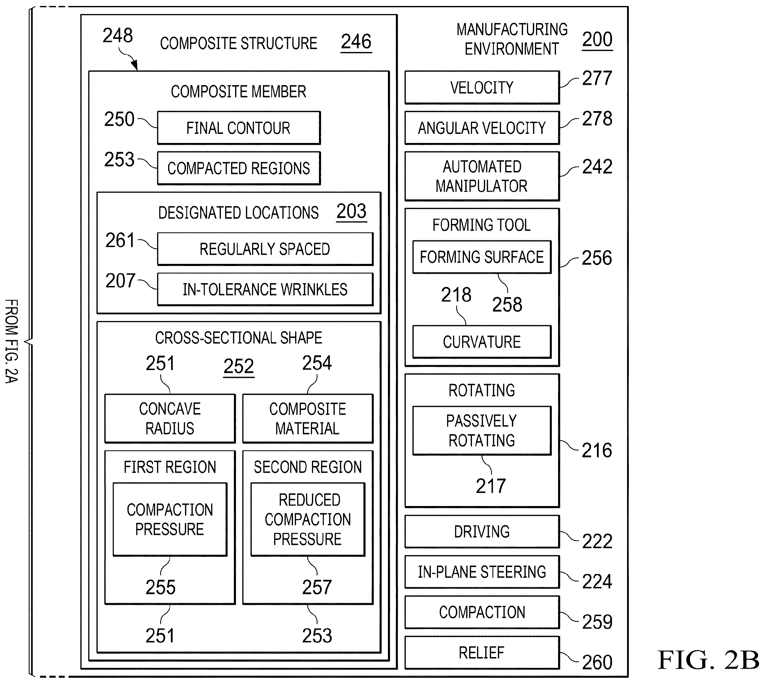

Turning now to **Figures 2A** **and** **2B****,** an illustration of a block diagram of a manufacturing environment is depicted in accordance with an illustrative example. A composite member of aircraft **100** of **Figure 1** can be compacted by roller compactor **206** of **Figures 2A** **and** **2B****.** Roller compactor **206** can be used to compact composite material **254** onto forming tool **256.**

In this illustrative example, roller compactor **206** comprises compaction surface **210** configured to contact composite material **254.** During operation, roller compactor **206** applies compressive forces to composite material **254** as roller compactor **206** moves along a compaction path. During operation, roller compactor **206** applies compressive forces to composite material **254** while compaction surface **210** is in contact with the composite material **254.**

Roller compactor **206** comprises any desirable number of features to provide desirable compaction of composite member **248** and reduce undesirable inconsistencies in resulting composite structure **246.** In some illustrative examples, roller compactor **206** comprises a multi-material compaction surface **210** to control application of compressive forces. In some illustrative examples, roller compactor **206** comprises independently movable roller segments **264** to maintain velocity **277** as a constant while angular velocity **278** is dependent on a size and shape of a portion of roller compactor **206.** In some illustrative examples, roller compactor **206** comprises channels **280** in compaction surface **210** to provide localized relief **260** from compaction **259.** Any desirable combination of at least one of different materials, channels **280,** or independently movable roller segments **264** forming compaction surface **210** can reduce inconsistencies in composite member **248.** In some illustrative examples, composite member **248** can be referred to as an elongate composite member.

In some illustrative examples, roller compactor **206** comprises first portion **234** of compaction surface **210** formed of first material **226,** and second portion **236** of compaction surface **210** formed of second material **228** having a lower hardness than first material **226.** In this illustrative example, first material **226** has hardness **227** and second material **228** has hardness **229.** In this illustrative example, hardness **227** is greater than hardness **229.** Second portion **236** is configured to selectively reduce compaction pressure by second portion **236** of roller body **208.** By selectively reducing compaction pressure of second portion **236,** pressure applied by first portion **234** is greater than pressure applied by second portion **236.** In some illustrative examples, second portion **236** is selected to locally relax compaction **259** outside of concave radius **251** of cross-sectional shape **252** of composite material **254** to intensify compaction **259** in concave radius **251.**

In some illustrative examples, compaction surface **210** is complementary to cross-sectional shape **252** of composite member **248.** In some illustrative examples, compaction surface **210** is complementary to forming surface **258** of forming tool **256.** In some illustrative examples, cross-sectional shape **201** of roller compactor **206** is complementary to cross-sectional shape **252** of composite member **248.**

In some illustrative examples, second portion **236** is selected to reduce compaction inconsistencies in a composite material **254** compacted by rolling roller compactor **206** over composite material **254.** In some illustrative examples, at least one of second material **228** or second portion **236** are selected to reduce compaction inconsistencies such as wrinkles, gaps, or bridging.

In some illustrative examples, first portion **234** of compaction surface **210** comprises web forming surfaces **214,** and wherein second portion **236** of compaction surface **210** comprises cap forming surface **220.** In some illustrative examples, a size and a shape of cap forming surface **220** are configured to reduce bridging in composite member **248.**

In some illustrative examples, first material **226** and second material **228** are configured to provide sufficient friction with composite material **254** being compacted to passively roll roller compactor **206** about rotational shaft **272.** In these illustrative examples, end effector **202** will be driven along a compaction path by a manipulator, such as automated manipulator **242,** such that compaction surface **210** of compactor **204** is in contact with composite material **254** of composite member **248.**

The multi-material design of roller compactor **206** with at least first material **226** and second material **228** allows for variable stiffness along a contact profile, allowing compaction pressure to be locally intensified or relaxed in different regions. When composite member **248** comprises a composite stringer, variable stiffness enables additional compaction at web/cap radii for increasing quality and reducing or preventing inconsistencies due to bridging/wrinkles. Second material **228** with lower hardness will provide reduced compaction pressure **257.** First material **226** with greater hardness will provide more compaction pressure, compaction pressure **255.**

Roller compactor **206** comprising first material **226** and second material **228** can comprise either integrated roller **262** or independently movable roller segments **264.** When roller compactor **206** is integrated roller **262,** all portions of compaction surface **210** are connected. When roller compactor **206** is integrated roller **262,** all portions of compaction surface **210** move about rotational shaft **272** together. When roller compactor **206** comprises independently movable roller segments **264,** compaction surface **210** is formed of segments that can be moved independently of each other.

In some illustrative examples, roller compactor **206** is configured to compact composite material **254** and comprises rotational shaft **272,** roller body **208** rotatably seated **273** on rotational shaft **272,** and auxiliary roller **230** rotatably seated **273** on rotational shaft **272** such that auxiliary roller **230** is independently movable relative to roller body **208.**

In some illustrative examples, roller compactor **206** further comprises roller bearings **268** between roller body **208** and rotational shaft **272.** In some illustrative examples, roller compactor **206** further comprises bearings **274** between roller body **208** and auxiliary roller **230.**

In some illustrative examples, roller body **208** has first diameter **237,** wherein auxiliary roller **230** has first diameter **239** different from first diameter **237.** In some illustrative examples, first diameter **237** is larger than first diameter **239.**

In some illustrative examples, roller compactor **206** further comprises roller bearings **266** between auxiliary roller **230** and rotational shaft **272.**

In some illustrative examples, roller body **208** and auxiliary roller **230** are configured to have a same velocity **277** at a forming surface and different angular velocity **278** while maintaining compaction **259** with desirable levels of friction.

When roller compactor **206** comprises independently movable roller segments **264,** compactor **204** is a segmented roller for reducing or preventing differential rotational surface velocity friction effects. Independently movable roller segments **264** reduce effects due to differential rotational surface velocity. Independently movable roller segments **264** reduce effects due to variable radius in design profile of roller compactor **206.** Independently movable roller segments **264** reduce effects due to variable angular velocity **278** during in-plane steering **224** through curvature **218** of a compaction path. The curvature matches final contour **250** of composite member **248.** Through curvature **218,** an outer roller, such as one of auxiliary roller **230** or auxiliary roller **232,** will have a greater angular velocity **278** than an inside roller, such as the other of auxiliary roller **230** or auxiliary roller **232.** In some illustrative examples, passively rotating **217** independently movable roller segments **264** at different angular velocities comprises rotating **216** independently movable roller segments **264** at different angular velocities due to driving **222** roller compactor **206** with in-plane steering **224** through curvature **218.**

In this illustrative example, each roller segment of independently movable roller segments **264** has its own roller bearings to enable independent rotation on a common shaft, rotational shaft **272.** Bearings at mating interfaces, bearings **274** and bearings **276,** between roller segments prevent friction/binding due to differential angular velocity **278** between adjacent segments. In some illustrative examples, the bearings at mating surfaces are needle bearings.

In some illustrative examples, roller compactor **206** is configured to compact composite material **254** and comprises roller body **208** having first diameter **237,** and auxiliary roller **230** adjacent roller body **208,** auxiliary roller **230** having first diameter **239** different from first diameter **237** of roller body **208** and independently movable relative to roller body **208** such that auxiliary roller **230** can have a different angular velocity **278** as roller body **208.**

In some illustrative examples, first diameter **239** is smaller than first diameter **237.** In some illustrative examples, roller body **208** and auxiliary roller **230** are rotationally mounted **275** to a same rotational shaft, rotational shaft **272.**

In some illustrative examples, roller compactor **206** further comprises roller bearings **266** between auxiliary roller **230** and rotational shaft **272.** In some illustrative examples, roller compactor **206** further comprises bearings **274** between roller body **208** and auxiliary roller **230.** In some illustrative examples, roller body **208** comprises web forming surfaces **214** and cap forming surface **220** for composite member **248.** In some illustrative examples, auxiliary roller **230** comprises flange forming surface **238.**

In some illustrative examples, roller compactor **206** further comprises auxiliary roller **232.** In some illustrative examples, roller compactor **206** further comprises roller bearings **270** between auxiliary roller **232** and rotational shaft **272.** In some illustrative examples, roller compactor **206** further comprises bearings **276** between roller body **208** and auxiliary roller **232.** In some illustrative examples, auxiliary roller **232** comprises flange forming surface **244.**

In some illustrative examples, channels **280** along roller compactor **206** profile allow compaction relief functionality during continuous rolling compaction. Channels **280** can be uniformly distributed along the circumference of roller compactor **206.** Width **285** of channels **280** could be modified as desired for improved forming quality.

In some illustrative examples, roller compactor **206** comprises compaction surface **210** configured to contact composite material **254,** and channels **280** extending across at least a portion of compaction surface **210.** In some illustrative examples, channels **280** are present in roller body **208.**

In some illustrative examples, channels **280** extend continuously across compaction surface **210.** In some illustrative examples, channels **280** are discontinuous on compaction surface **210.** In some illustrative examples, depth **286** of channels **280** vary across compaction surface **210.** In some illustrative examples, at least one channel of channels **280** has depth **286** that varies. In some illustrative examples, at least one channel of channels **280** has a different depth **286** than other channels. In some illustrative examples, depth **286** is selected such that channels **280** maintain relief **260** while compaction **259** is applied to composite material **254.** In some illustrative examples, depth **286** is sufficient such that material of roller compactor **206** beneath channels **280** does not contact composite material **254.**

In some illustrative examples, width **285** of channels **280** vary across compaction surface **210.** In some illustrative examples, at least one channel of channels **280** has a different width **285** than other channels. In some illustrative examples, at least one channel of channels **280** has width **285** that varies along the respective channel. In some illustrative examples, each channel of channels **280** has a same width **285.**

In some illustrative examples, channels **280** are substantially straight. In other illustrative examples, channels **280** are curved.

In some illustrative examples, channels **280** are configured to locally provide relief **260** from compaction **259.** In some illustrative examples, at least one channel of channels **280** comprises filler material **281** in the respective channel. Filler material **281** comprises any desirable material having a compliance configured to tailor a compaction applied to composite material **254.** In some illustrative examples, roller compactor **206** further comprises filler material **281** within at least one channel of channels **280,** wherein filler material **281** has a lower hardness than first material **226** of compaction surface **210.** In some illustrative examples, filler material **281** is a polymer. In some illustrative examples, filler material **281** is silicone.

In some illustrative examples, compaction surface **210** comprises cap forming surface **220,** web forming surfaces **214** opposite cap forming surface **220,** and flange forming surfaces, flange forming surface **238** and flange forming surface **244,** adjacent web forming surfaces **214,** and wherein channels **288** or channels **294** extending across at least a portion of the flange forming surfaces have at least one of a different width, a different frequency, or a different depth than channels **280** of web forming surfaces **214.**

In this illustrative example, channels **288** in flange forming surface **238** have shape **290** including width **291** and depth **292.** In some illustrative examples, width **291** and depth **292** are the same as width **285** and depth **286** of channels **280.** In some illustrative examples, at least one of width **291** or depth **292** are different than width **285** and depth **286** of channels **280.**

In this illustrative example, channels **288** in flange forming surface **238** have frequency **293.** In some illustrative examples, frequency **293** is the same as frequency **282.** In some illustrative examples, frequency **293** is different from frequency **282.** In some illustrative examples, frequency **293** and frequency **282** can be described in terms of an angular measurement of the cross-section of flange forming surface **238.** In some illustrative examples, frequency **293** and frequency **282** can be described in terms of a physical distance across compaction surface **210.** In some illustrative examples, channels **288** in flange forming surface **238** comprise filler material **289.**

In some illustrative examples, channels **280** comprise more than one set of channels, wherein each set of channels has a respective shape. In some illustrative examples, by having a different shape **284,** at least one of width **285,** depth **286,** or path across compaction surface **210** is different.

In this illustrative example, channels **294** in flange forming surface **244** have shape **296** including width **297** and depth **298.** In some illustrative examples, width **297** and depth **298** are the same as width **285** and depth **286** of channels **280.** In some illustrative examples, at least one of width **297** or depth **298** are different than width **285** and depth **286** of channels **280.**

In this illustrative example, channels **294** in flange forming surface **244** have frequency **299.** In some illustrative examples, frequency **299** is the same as frequency **282.** In some illustrative examples, frequency **299** is different from frequency **282.** In some illustrative examples, frequency **299** and frequency **282** can be described in terms of an angular measurement of the cross-section of flange forming surface **244.** In some illustrative examples, frequency **299** and frequency **282** can be described in terms of a physical distance across compaction surface **210.** In some illustrative examples, channels **294** in flange forming surface **244** comprise filler material **295.**

In some illustrative examples, channels **280** comprise more than one set of channels, wherein each set of channels has a respective shape. In some illustrative examples, by having a different shape **284,** at least one of width **285,** depth **286,** or path across compaction surface **210** is different.

In some illustrative examples, compacted regions **253** are formed in composite material **254** during forming of composite material **254.** In some illustrative examples, in-tolerance wrinkles **207** are located in designated locations **203** between compacted regions **253** of composite material **254.** In some illustrative examples, in-tolerance wrinkles **207** are located in designated locations **203** comprises providing relief **260** from compaction **259** in designated locations **203** during the forming of composite material **254.** In some illustrative examples, locating in-tolerance wrinkles **207** in designated locations **203** comprises allowing formation of in-tolerance wrinkles 207 within regularly spaced **261** designated locations **203** between compacted regions **253.**

The illustration of manufacturing environment **200** in **Figures 2A** **and** **2B** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

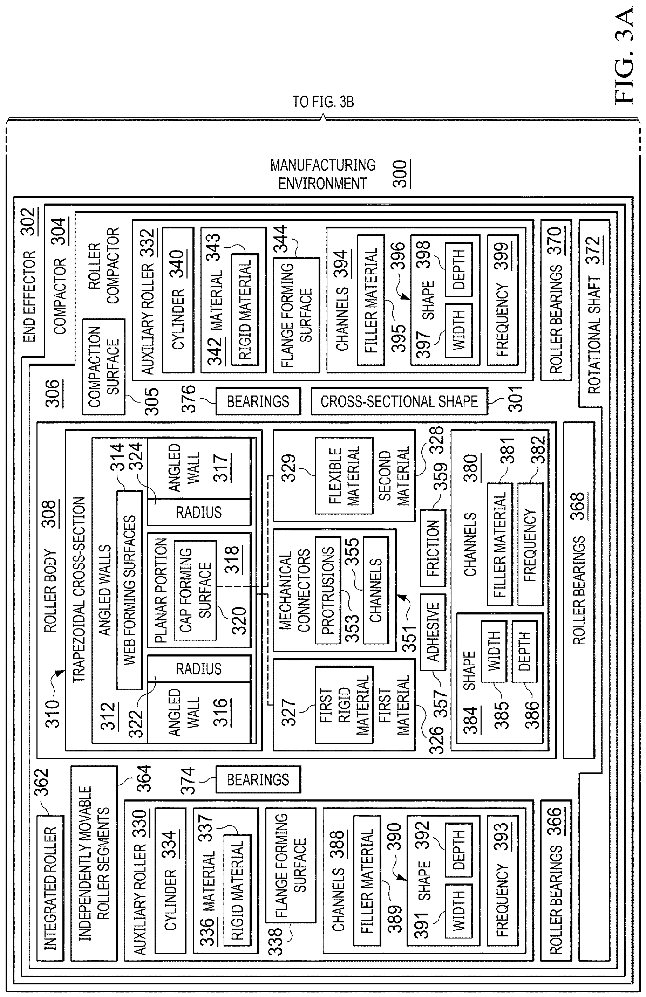

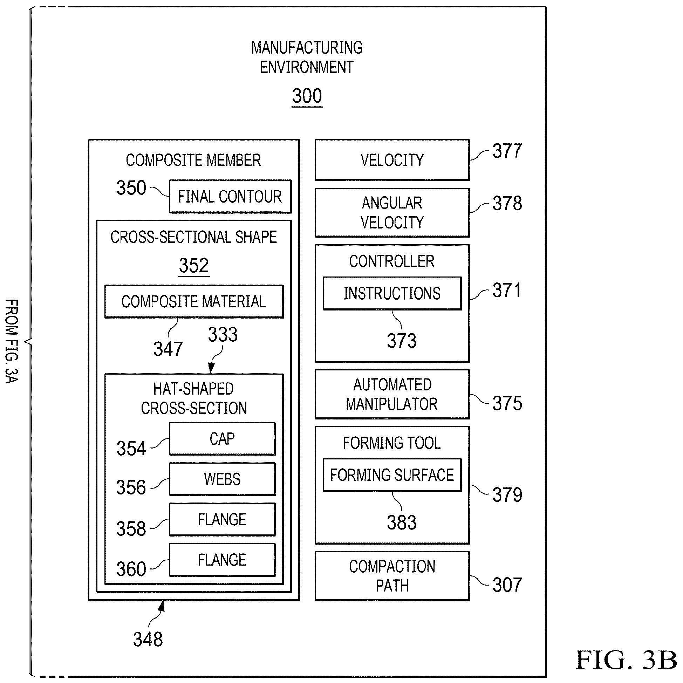

Turning now to **Figures 3A** **and** **3B****,** an illustration of a block diagram of a manufacturing environment is depicted in accordance with an illustrative example. A composite member of aircraft **100** of **Figure 1** can be compacted by roller compactor **306** of **Figures 3A** **and** **3B****.** In some illustrative examples, roller compactor **306** is an example of roller compactor **206.** Roller compactor **306** can be used to compact composite material **347** onto forming tool **379.**

Composite member **348** comprises composite material **347** that is in a "green" state. Composite material **347** is formable as composite material **347** is uncured or partially cured. In this illustrative example, roller compactor **306** comprises compaction surface **305** configured to contact composite material **347.** During operation, roller compactor **306** applies compressive forces to composite material **347** as roller compactor **306** moves along compaction path **307.** Compaction path **307** is followed to compact composite member **348** having final contour **350.** During operation, roller compactor **306** applies compressive forces to composite material **347** while compaction surface **305** is in contact with composite material **347.**

In some illustrative examples, composite member **348** can take the form of a composite stringer or composite stiffener. In some illustrative examples, composite member **348** can be referred to as an elongate composite member. Composite member **348** has cross-sectional shape **352.** In some illustrative examples, cross-sectional shape **352** can be hat-shaped cross-section **333.** Hat-shaped cross-section **333** comprises cap **354** between webs **356** and flanges, flange **358** and flange **360,** adjacent webs **356.**

Roller compactor **306** is configured to apply a desired amount of compaction pressure against composite material **347** throughout cross-sectional shape **352** of composite member **348.** Roller compactor **306** is configured to apply a desired amount of compaction pressure against composite material **347** as roller compactor **306** compacts composite member **348** in final contour **350.** In some illustrative examples, final contour **350** comprises twists or curves along the length of composite member **348.**

Roller compactor **306** comprises any desirable number of features to provide desirable compaction of composite member **348** and reduce undesirable inconsistencies in a resulting composite structure. In some illustrative examples, roller compactor **306** comprises a multi-material compaction surface **305** to control application of compressive forces. In some illustrative examples, roller compactor **306** comprises independently movable roller segments **364** to maintain velocity **377** as a constant while angular velocity **378** is dependent on a size and shape of a portion of roller compactor **306.** In some illustrative examples, roller compactor **306** comprises channels in compaction surface **305** to provide localized relief from compaction. Any desirable combination of at least one of different materials, channels, or independently movable roller segments forming compaction surface **305** can reduce inconsistencies in elongate composite member.

In some illustrative examples, roller compactor **306** comprises a first portion of compaction surface **305** formed of first material **326,** and a second portion of compaction surface **305** formed of second material **328** having a lower hardness than first material **326.** The second portion is configured to selectively reduce compaction pressure by the second portion of roller body **308.**

In some illustrative examples, first material **326** can be referred to as a rigid material or first rigid material **327.** First material **326** has a greater durometer hardness than second material **328.** In some illustrative examples, second material **328** is referred to as a compliant material or flexible material **329.** In this illustrative example, although two materials with different durometer hardness are depicted, in other illustrative examples, more than two materials can be used. In some illustrative examples, compactor **304** can comprise more than two materials with different durometer hardnesses. In some illustrative examples, the material of compaction surface **305** can be tailored based on desired compaction and cross-sectional shape **352** of composite material **347** to be compacted. In some illustrative examples, first material **326** has a range of hardnesses. In some illustrative examples, second material **328** has a different range of hardnesses.

When composite member **348** has hat-shaped cross-section **333,** roller compactor **306** comprises cap forming surface **320,** web forming surfaces **314,** flange forming surface **338,** and flange forming surface **344.** In some illustrative examples, web forming surfaces **314** are formed by angled walls **312.** In some illustrative examples, cap forming surface **320** comprises planar portion **318** between angled wall **316** of angled walls **312** and angled wall **317** of angled walls **312.** As depicted, angled wall **316** is connected to planar portion **318** by radius **322.** As depicted, angled wall **317** is connected to planar portion **318** by radius **324.** Flange forming surface **344** is connected to angled wall **317.** Flange forming surface **338** is connected to angled wall **316.**

In some illustrative examples, compaction surface **305** is complementary to cross-sectional shape **352** of composite member **348.** In some illustrative examples, compaction surface **305** is complementary to forming surface **383** of forming tool **379.** In this illustrative example, forming surface **383** is configured to support composite member **348** having cross-sectional shape **352** and final contour **350.**

In some illustrative examples, second portion is selected to reduce compaction inconsistencies in a composite material **347** compacted by rolling roller compactor **306** over composite material **347.** In some illustrative examples, at least one of second material **328** or second portion are selected to reduce compaction inconsistencies such as wrinkles, gaps, or bridging. In some illustrative examples, at least one of a size, a shape, and a position of the second portion formed of second material **328** are selected based on cross-sectional shape **352** of composite member **348.** In some illustrative examples, second material **328** is selected to tailor compaction pressure to portions of cross-sectional shape **352** of composite member **348.**

In some illustrative examples, the first portion of compaction surface **305** comprises web forming surfaces **314,** and the second portion of compaction surface **305** comprises cap forming surface **320.** In these illustrative examples, cap forming surface **320** is more compliant than web forming surfaces **314.** In some illustrative examples, roller compactor **306** comprises radiuses between web forming surfaces **314** and cap forming surface **320,** wherein the radiuses, radius **322** and radius **324,** are formed of first material **326.** In some illustrative examples, compliance of cap forming surface **320** allows for radius **322** and radius **324** formed of first material **326** to provide increased compaction pressure. In some illustrative examples, compliance of cap forming surface **320** allows for cap forming surface **320** to provide reduced compaction pressure. In some illustrative examples, a size and a shape of cap forming surface **320** are configured to reduce bridging in composite member **348.**

Roller body **308** can comprise any desirable cross-section configured to compact cross-sectional shape **352** of composite member **348.** In some illustrative examples, roller body **308** comprises trapezoidal cross-section **310** including web forming surfaces **314** and cap forming surface **320.** In other illustrative examples, roller body **308** comprises a number of curved surfaces. In some illustrative examples, flange forming surfaces are not present. In some illustrative examples, cap forming surface **320** is not planar.

First material **326** and second material **328** can be joined in any desirable fashion. In some illustrative examples, roller body **308** is three-dimensionally printed. In some illustrative examples, first material **326** and second material **328** are three-dimensionally printed together. In some illustrative examples, second material **328** can be joined to first material **326** by adhesive **357** between first material **326** and second material **328.** In some illustrative examples, second material **328** is restrained against first material **326** by friction **359.** In some illustrative examples, mechanical connectors **351** maintain second material **328** on first material **326.** In some illustrative examples, mechanical connectors **351** can be referred to as mechanical restraints.

In some illustrative examples, mechanical connectors **351** comprise protrusions **353** formed of first material **326,** and channels **355** in second material **328** positioned over protrusions **353** to secure second material **328** to first material **326.** In some illustrative examples, mechanical connectors **351** comprise protrusions **353** formed of second material **328,** and channels **355** in first material **326** receiving protrusions **353** to secure second material **328** to first material **326.** In some illustrative examples, mechanical connectors **351** comprise a combination of channels **355** and protrusions **353** formed of second material **328** configured to interface with a combination of channels **355** and protrusions **353** in first material **326** to secure second material **328** to first material **326.**

In some illustrative examples, first material **326** and second material **328** are configured to provide sufficient friction with composite material **347** being compacted to passively roll roller compactor **306** about rotational shaft **372.** In these illustrative examples, end effector **302** will be driven along compaction path **307** by a manipulator, such as automated manipulator **375,** such that compaction surface **305** of compactor **304** is in contact with composite material **347** of composite member **348.** Application of pressure by end effector **302** and movement along compaction path **307** generates movement of roller compactor **306** due to friction.

The multi-material design of roller compactor **306** with at least first material **326** and second material **328** allows for variable stiffness along a contact profile, allowing compaction pressure to be locally intensified or relaxed in different regions. When composite member **348** comprises a composite stringer, variable stiffness enables additional compaction at web/cap radii for increasing quality and reducing or preventing inconsistencies due to bridging/wrinkles. Second material **328** with lower hardness will provide less compaction pressure. First material **326** with greater hardness will provide more compaction pressure.

Roller compactor **306** comprising first material **326** and second material **328** can comprise either integrated roller **362** or independently movable roller segments **364.** When roller compactor **306** is integrated roller **362,** all portions of compaction surface **305** are connected. When roller compactor **306** is integrated roller **362,** all portions of compaction surface **305** move about rotational shaft **372** together. When roller compactor **306** comprises independently movable roller segments **364,** compaction surface **305** is formed of segments that can be moved independently of each other.

In some illustrative examples, roller compactor **306** is configured to compact a composite material **347** and comprises rotational shaft **372,** roller body **308** rotatably seated on rotational shaft **372,** and auxiliary roller **330** rotatably seated on rotational shaft **372** such that auxiliary roller **330** is independently movable relative to roller body **308.** In some illustrative examples, roller compactor **306** further comprises auxiliary roller **332** rotatably seated on rotational shaft **372** such that auxiliary roller **332** is independently movable relative to roller body **308.**

In some illustrative examples, roller compactor **306** further comprises roller bearings **368** between roller body **308** and rotational shaft **372.** Roller bearings **368** enable rotation of roller body **308** about rotational shaft **372.**

In some illustrative examples, roller compactor **306** further comprises bearings **374** between roller body **308** and auxiliary roller **330.** In some illustrative examples, roller compactor **306** further comprises bearings **376** between roller body **308** and auxiliary roller **332.** Bearings **374** ease independent movement of auxiliary roller **330** and roller body **308** relative to each other. Bearings **376** ease independent movement of auxiliary roller **332** and roller body **308** relative to each other.

In some illustrative examples, roller body **308** has a first diameter, wherein auxiliary roller **330** has a second diameter different from the first diameter. In some illustrative examples, roller body **308** has a first diameter, wherein auxiliary roller **332** has a second diameter different from the first diameter. In some illustrative examples, the first diameter is larger than the second diameter.

In some illustrative examples, auxiliary roller **330** comprises cylinder **334.** In some illustrative examples, auxiliary roller **332** comprises cylinder **340.**

Auxiliary roller **330** comprises material **336.** In some illustrative examples, material **336** can be referred to as rigid material **337.** Auxiliary roller **332** comprises material **342.** In some illustrative examples, material **342** can be referred to as rigid material **343.** In some illustrative examples, compaction surface **305** including auxiliary roller **330** and auxiliary roller **332** are formed of first material **326.** In this illustrative example, material **336** and material **342** are the same as first material **326.** In some illustrative examples, compaction surface **305** is formed of more than one material. In some illustrative examples, at least one of material **336** or material **342** is different from first material **326** of roller body **308.**

In some illustrative examples, roller body **308** and auxiliary roller **330** are configured to have same velocity **377** at forming surface **383** and different angular velocity **378** while maintaining compaction with desirable levels of friction. In some illustrative examples, roller body **308** and auxiliary roller **332** are configured to have same velocity **377** at forming surface **383** and different angular velocity **378** while maintaining compaction with desirable levels of friction.

When roller compactor **306** comprises independently movable roller segments **364,** compactor **304** is a segmented roller for reducing or preventing differential rotational surface velocity friction effects. Independently movable roller segments **364** reduce effects due to differential rotational surface velocity. Independently movable roller segments **364** reduce effects due to variable radius in design profile of roller compactor **306.** Independently movable roller segments **364** reduce effects due to variable angular velocity **378** during in-plane steering through curvature of compaction path **307.** Through curvature, an outer roller, such as one of auxiliary roller **330** or auxiliary roller **332,** will have a greater angular velocity **378** than an inside roller, such as the other of auxiliary roller **330** or auxiliary roller **332.**

In this illustrative example, each roller segment of independently movable roller segments **364** has its own roller bearings to enable independent rotation on a common shaft, rotational shaft **372.** Bearings at mating interfaces, bearings **374** and bearings **376,** between roller segments prevent friction/binding due to differential angular velocity **378** between adjacent segments. In some illustrative examples, the bearings at mating surfaces are needle bearings.

In some illustrative examples, roller compactor **306** is configured to compact a composite material **347** and comprises roller body **308** having a first diameter, and auxiliary roller **330** adjacent roller body **308,** auxiliary roller **330** having a second diameter different from first diameter of roller body **308** and independently movable relative to roller body **308** such that auxiliary roller **330** can have a different angular velocity **378** as roller body **308.**

In some illustrative examples, compaction surface **305** of roller compactor **306** with independently movable roller segments **364** comprises one material. In some illustrative examples, compaction surface **305** of roller compactor **306** with independently movable roller segments **364** comprises more than one material to tailor compaction.

In some illustrative examples, channels **380** along roller compactor **306** profile allow compaction relief functionality during continuous rolling compaction. Channels **380** can be uniformly distributed along the circumference of roller compactor **306.** Width **385** of channels **380** could be modified as desired for improved forming quality.

In some illustrative examples, roller compactor **306** comprises compaction surface **305** configured to contact composite material **347,** and channels **380** extending across at least a portion of compaction surface **305.** In some illustrative examples, channels **380** are present in roller body **308.**

In some illustrative examples, channels **380** extend continuously across compaction surface **305.** In some illustrative examples, channels **380** are discontinuous on compaction surface **305.** In some illustrative examples, depth **386** of channels **380** vary across compaction surface **305.** In some illustrative examples, at least one channel of channels **380** has depth **386** that varies. In some illustrative examples, at least one channel of channels **380** has a different depth **386** than other channels.

In some illustrative examples, width **385** of channels **380** vary across compaction surface **305.** In some illustrative examples, at least one channel of channels **380** has a different width **385** than other channels. In some illustrative examples, at least one channel of channels **380** has width **385** that varies along the respective channel. In some illustrative examples, each channel of channels **380** has a same width **385.**

In some illustrative examples, channels **380** are substantially straight. In other illustrative examples, channels **380** are curved.

In some illustrative examples, channels **380** are configured to locally provide relief from compaction. In some illustrative examples, at least one channel of channels **380** comprises filler material **381** in the respective channel. Filler material **381** comprises any desirable material having a compliance configured to tailor a compaction applied to composite material **347.** In some illustrative examples, roller compactor **306** further comprises filler material **381** within at least one channel of channels **380,** wherein filler material **381** has a lower hardness than first material **326** of compaction surface **305.** In some illustrative examples, filler material **381** is a polymer. In some illustrative examples, filler material **381** is silicone.

In some illustrative examples, compaction surface **305** comprises cap forming surface **320,** web forming surfaces **314** opposite cap forming surface **320,** and flange forming surfaces, flange forming surface **338** and flange forming surface **344,** adjacent web forming surfaces **314,** and wherein channels **388** or channels **394** extending across at least a portion of the flange forming surfaces have at least one of a different width, a different frequency, or a different depth than channels **380** of web forming surfaces **314.**

In this illustrative example, channels **388** in flange forming surface **338** have shape **390** including width **391** and depth **392.** In some illustrative examples, width **391** and depth **392** are the same as width **385** and depth **386** of channels **380.** In some illustrative examples, at least one of width **391** or depth **392** are different than width **385** and depth **386** of channels **380.**

In this illustrative example, channels **388** in flange forming surface **338** have frequency **393.** In some illustrative examples, frequency **393** is the same as frequency **382.** In some illustrative examples, frequency **393** is different from frequency **382.** In some illustrative examples, frequency **393** and frequency **382** can be described in terms of an angular measurement of the cross-section of flange forming surface **338.** In some illustrative examples, frequency **393** and frequency **382** can be described in terms of a physical distance across compaction surface **305.** In some illustrative examples, channels **388** in flange forming surface **338** comprise filler material **389.**

In some illustrative examples, channels **380** comprise more than one set of channels, wherein each set of channels has a respective shape. In some illustrative examples, by having a different shape **384,** at least one of width **385,** depth **386,** or path across compaction surface **305** is different.

In this illustrative example, channels **394** in flange forming surface **344** have shape **396** including width **397** and depth **398.** In some illustrative examples, width **397** and depth **398** are the same as width **385** and depth **386** of channels **380.** In some illustrative examples, at least one of width **397** or depth **398** are different than width **385** and depth **386** of channels **380.**

In this illustrative example, channels **394** in flange forming surface **344** have frequency **399.** In some illustrative examples, frequency **399** is the same as frequency **382.** In some illustrative examples, frequency **399** is different from frequency **382.** In some illustrative examples, frequency **399** and frequency **382** can be described in terms of an angular measurement of the cross-section of flange forming surface **344.** In some illustrative examples, frequency **399** and frequency **382** can be described in terms of a physical distance across compaction surface **305.** In some illustrative examples, channels **394** in flange forming surface **344** comprise filler material **395.**

In some illustrative examples, channels **380** comprise more than one set of channels, wherein each set of channels has a respective shape. In some illustrative examples, by having a different shape **384,** at least one of width **385,** depth **386,** or path across compaction surface **305** is different.

In some illustrative examples, roller compactor **306** further comprises filler material **381** within at least one channel of channels **380,** wherein filler material **381** has a lower hardness than first material **326** of compaction surface **305.** In some illustrative examples, filler material **381** is a polymer. In some illustrative examples, filler material **381** is silicone.

In some illustrative examples, channels **380** have a width **385** in range of 1.27 mm (0.05 inch) to 7.62 mm (0.3 inch). In some illustrative examples, channels **380** have a width **385** in range of 2.54 mm (0.1 inch) to 5.08 mm (0.2 inch). In some illustrative examples, channels **380** have frequency **382** of one channel approximately every 45 degrees of a cross-sectional view perpendicular to a rotational axis of roller compactor **306.**

In some illustrative examples, roller compactor **306** comprises compaction surface **305** configured to contact a composite material **347,** and channels **380** in at least a portion of compaction surface **305,** wherein channels **380** are configured to locally provide relief from compaction. Providing relief from compaction can reduce or eliminate inconsistencies in compacting composite member **348.**

In some illustrative examples, roller compactor **306** with channels **380** comprises integrated roller **362.** In some illustrative examples, roller compactor **306** with channels **380** comprises independently movable roller segments **364.** In some illustrative examples, roller compactor **306** with channels **380** comprises more than one material forming compaction surface **305.**

The illustration of manufacturing environment **300** in **Figures 3A** **and** **3B** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, in some illustrative examples, composite member **348** can have cross-sectional shape **352** different from hat-shaped cross-section **333.** In some illustrative examples, compaction surface **305** comprises additional forming surfaces. In some illustrative examples, compaction surface **305** has fewer forming surfaces than those depicted.

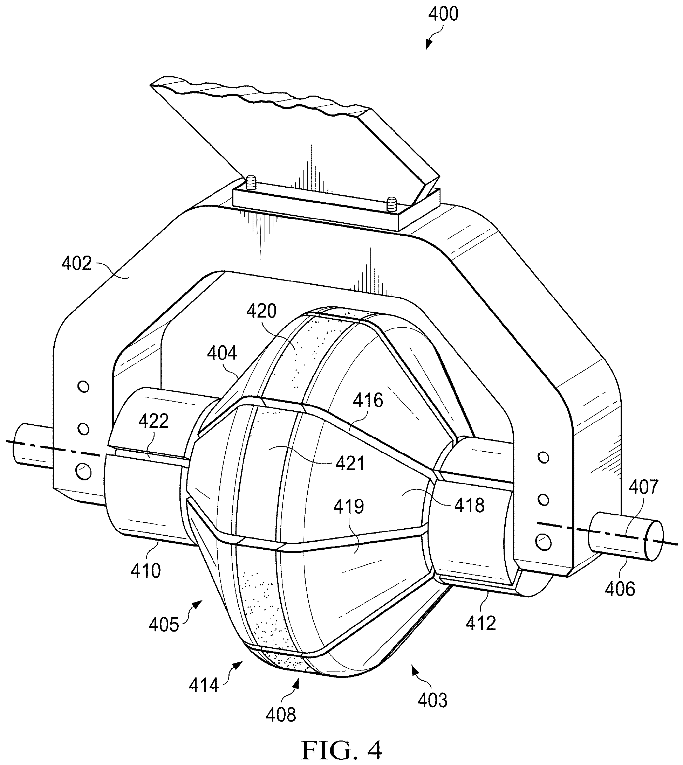

Turning now to **Figure 4****,** an illustration of an isometric view of a compactor is depicted in accordance with an illustrative example. Compactor **404** can be used to compact a composite material in manufacturing a component of aircraft **100** of **Figure 1****.** Compactor **404** is a physical implementation of compactor **204** of **Figures 2A** **and** **2B****.** Compactor **404** is a physical implementation of compactor **304** of **Figures 3A** **and** **3B****.**

In view **400,** compactor **404** is connected to end effector **402.** In this illustrative example, compactor **404** comprises roller compactor **405.** Roller compactor **405** comprises independently movable roller segments **403.**

Compactor **404** comprises roller body **408** rotatably mounted on rotational shaft **406.** In this illustrative example, compactor **404** further comprises auxiliary roller **410** adjacent roller body **408.** In this illustrative example, compactor **404** further comprises auxiliary roller **412** adjacent roller body **408.**

In this illustrative example, roller compactor **405** comprises compaction surface **414** configured to contact a composite material. During operation, roller compactor **405** applies compressive forces to the composite material as the roller compactor **405** moves along a compaction path. During operation, roller compactor **405** applies compressive forces to the composite material while compaction surface **414** is in contact with the composite material.

Roller compactor **405** comprises several features to provide desirable compaction of an elongate composite member and reduce undesirable inconsistencies in a resulting composite structure. In this illustrative example, roller compactor **405** comprises a multi-material compaction surface **414** to control application of compressive forces.

In this illustrative example, roller compactor **405** comprises first portion **419** of compaction surface **414** formed of first material **418,** and second portion **421** of compaction surface **414** formed of second material **420** having a lower hardness than first material **418.** Second portion **421** is configured to selectively reduce compaction pressure by second portion **421** of compaction surface **414.** In some illustrative examples, first material **418** is referred to as a rigid material. In some illustrative examples, second material **420** is referred to as a compliant material.

In this illustrative example, roller compactor **405** comprises compaction surface **414** configured to contact a composite material, and channels **416** extending across at least a portion of compaction surface **414.** In this illustrative example, channels **416** extend substantially parallel to a cross-sectional shape of the elongate composite member. In this illustrative example, channels **416** extend substantially perpendicular to the direction of movement of roller compactor **405.** In this illustrative example, channels **416** extend through both first material **418** and second material **420.** Channels **416** provide for selective relief during compaction of a composite material. Channels **416** provide for compaction of a composite member with reduced inconsistencies including reduced wrinkling.

In this illustrative example, channels **416** extend continuously across roller body **408.** In this illustrative example, channels **416** extend continuously across a portion of compaction surface **414.** In this illustrative example, channels **416** are discontinuous across compaction surface **414** as channels **422** in auxiliary roller **410** are different in at least one of frequency or size from channels **416** in roller body **408.** In this illustrative example, channels **416** and channels **422** form two sets of channels having two different frequencies. For example, the distances between channels **416** in roller body **408** are different than the distances between channels **422** in auxiliary roller **410.** Although channels **416** and channels **422** have different frequencies, channels **416** and channels **422** can have the same widths and the same depths.

In some illustrative examples, depths of channels **416** vary across compaction surface **414.** In some illustrative examples, depths of channels **422** vary across compaction surface **414.** Although the widths of channels **416** are continuous across compaction surface **414,** in some illustrative examples, widths of channels **416** vary across compaction surface **414.** Although the widths of channels **422** are continuous across compaction surface **414,** in some illustrative examples, widths of channels **422** vary across compaction surface **414.**

In this illustrative example, channels **416** are substantially linear across compaction surface **414.** In this illustrative example, channels **422** are substantially linear across compaction surface **414.** However, in other illustrative examples, channels, such as at least one channel of either channels **416** or channels **422,** can be curved. In other illustrative examples, channels, including channels **416** and channels **422,** can have any desirable width, depth, frequency, and angle across compaction surface **414.** In some illustrative examples, channels, such as channels **416,** have a frequency of one channel approximately every 45 degrees of a cross-sectional view perpendicular to rotational axis **417** of roller compactor **405.**

In this illustrative example, roller compactor **405** configured to compact a composite material comprises rotational shaft **406,** roller body **408** rotatably seated on rotational shaft **406,** and auxiliary roller **410** rotatably seated on rotational shaft **406** such that auxiliary roller **410** is independently movable relative to roller body **408.** In this illustrative example, roller compactor **405** further comprises auxiliary roller **412** rotatably seated on rotational shaft **406** such that auxiliary roller **412** is independently movable relative to roller body **408.** In this illustrative example, by having independently movable roller segments **403,** roller compactor **405** can have different angular velocities for auxiliary roller **410** and roller body **408** while maintaining a single velocity for roller compactor **405** over a composite member. In some illustrative examples, roller compactor **405** provides for compaction of a composite member with reduced inconsistencies including reduced wrinkling.

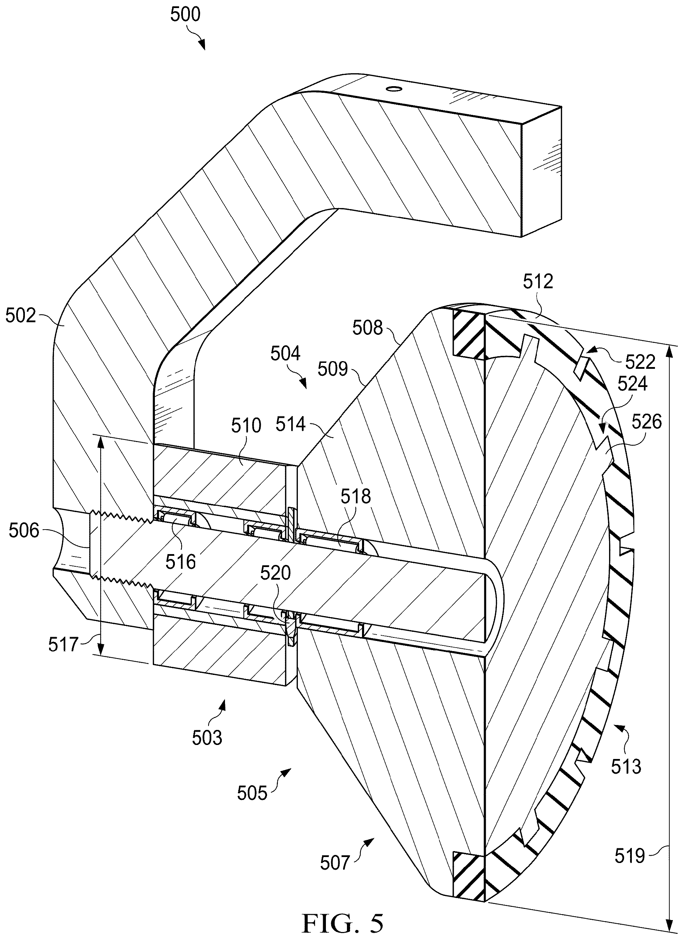

Turning now to **Figure 5****,** an illustration of a cross-sectional view of a compactor is depicted in accordance with an illustrative example. Compactor **504** can be used to compact a composite material in manufacturing a component of aircraft **100** of **Figure 1****.** Compactor **504** is a physical implementation of compactor **204** of **Figures 2A** **and** **2B****.** Compactor **504** is a physical implementation of compactor **304** of **Figures 3A** **and** **3B****.**

In view **500,** compactor **504** is connected to end effector **502.** In this illustrative example, compactor **504** comprises roller compactor **505.** Roller compactor **505** comprises independently movable roller segments **503.**

In this illustrative example, roller compactor **505** configured to compact a composite material comprises rotational shaft **506,** roller body **508** rotatably seated on rotational shaft **506,** and auxiliary roller **510** rotatably seated on rotational shaft **506** such that auxiliary roller **510** is independently movable relative to roller body **508.** In this illustrative example, by having independently movable roller segments **503,** roller compactor **505** can have different angular velocities for auxiliary roller **510** and roller body **508** while maintaining a single velocity for roller compactor **505** over a composite member. In some illustrative examples, roller compactor **505** provides for compaction of a composite member with reduced inconsistencies including reduced wrinkling.

In this illustrative example, roller compactor **505** comprises first portion **509** of compaction surface **507** formed of first material **514,** and second portion **513** of compaction surface **507** formed of second material **512** having a lower hardness than first material **514.** Second portion **513** is configured to selectively reduce compaction pressure by second portion **513** of compaction surface **507.** In some illustrative examples, first material **514** is referred to as a rigid material. In some illustrative examples, second material **512** is referred to as a compliant material.

In some illustrative examples, roller compactor **505** further comprises adhesive (not depicted) between first material **514** and second material **512.** In some illustrative examples, second material **512** is restrained against first material **514** by friction.

In some illustrative examples, roller compactor **505** further comprises protrusions **526** formed of first material **514,** and channels **524** in second material **512** positioned over protrusions **526** to secure second material **512** to first material **514.** Protrusions **526** and channels **524** may be referred to as mechanical connectors. Although protrusions **526** are shown as being formed of first material **514,** in other illustrative examples, second material **512** forms protrusions while first material **514** has channels. In some illustrative examples, first material **514** and second material **512** each have a mixture of protrusions and channels to restrain second material **512** on first material **514.**

In this illustrative example, roller compactor **505** comprises roller body **508** comprising a trapezoidal cross-section including web forming surfaces and a cap forming surface. In other illustrative examples, roller compactor **505** has any desirable cross-section configured to provide compaction to an elongate composite member. Additionally, roller compactor **505** comprises any desirable quantity of independently movable roller segments.

In this illustrative example, roller compactor **505** further comprises roller bearings **518** between roller body **508** and rotational shaft **506.** In this illustrative example, roller compactor **505** further comprises bearings **520** between roller body **508** and auxiliary roller **510.**

In this illustrative example, auxiliary roller **510** is cylindrical. However, auxiliary roller **510** can have any desirable cross-sectional shape. Auxiliary roller **510** can have any desirable size and any desirable cross-sectional shape to form portions of a cross-sectional shape of an elongate composite member.

In this illustrative example, roller body **508** comprises a trapezoidal cross-section. However, roller body **508** has any desirable cross-sectional shape. Roller body **508** can have any desirable size and any desirable cross-sectional shape to form portions of a cross-sectional shape of an elongate composite member.

In this illustrative example, roller compactor **505** is configured to compact a composite material and comprises roller body **508** having first diameter **519,** and auxiliary roller **510** adjacent roller body **508.** Auxiliary roller 510 has second diameter **517** smaller than roller body **508** and independently movable relative to roller body **508** such that auxiliary roller **510** can have a different angular velocity than roller body **508.** In this illustrative example, roller compactor **505** further comprises bearings **516** between auxiliary roller **510** and rotational shaft **506.**

In this illustrative example, roller compactor **505** comprises compaction surface **507** configured to contact a composite material, and channels **522** extending across at least a portion of compaction surface **507.** In this illustrative example, channels **522** extending through second material **512** are visible. However, additional channels (not visible) can be present in roller compactor **505.**

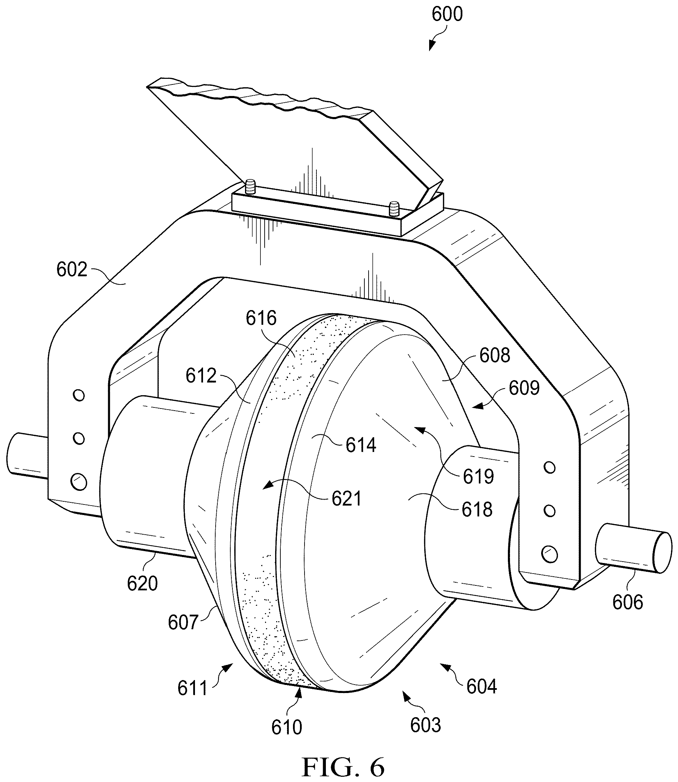

Turning now to **Figure 6****,** an illustration of an isometric view of a compactor is depicted in accordance with an illustrative example. Compactor **604** can be used to compact a composite material in manufacturing a component of aircraft **100** of **Figure 1****.** Compactor **604** is a physical implementation of compactor **204** of **Figures 2A** **and** **2B****.** Compactor **604** is a physical implementation of compactor **304** of **Figures 3A** **and** **3B****.**

In view **600,** end effector **602** comprises compactor **604.** In this illustrative example, compactor **604** is roller compactor **609.**

Compactor **604** comprises compaction surface **607** formed of two different materials. Compactor **604** comprises compaction surface **607** formed of first material **618** and second material **616** having a lower hardness than first material **618.**

The multi-material design of compactor **604** provides variable compaction pressure to be locally intensified/relaxed in different regions. By varying the compliance of the material of compaction surface **607,** compaction of the composite material is improved. The compliance of compaction surface **607** can be locally increased or decreased relative to other portions of compaction surface **607** to locally control compaction and friction. In some illustrative examples, for composite stiffeners such as stringers, additional compaction at radiuses connecting the webs and the cap can improve compaction. In some illustrative examples for composite stiffeners such as stringers, less compaction can be applied at locations outside of the radiuses to tailor stringer quality and prevent out of tolerance inconsistencies. In some illustrative examples, additional compaction at radiuses connecting the webs and the cap can enable compaction of material in the female radius of the stringer hat without bridging. In some illustrative examples, additional compaction can be applied at other locations of composite stiffeners.

Compactor **604** is configured to compact a composite material to a forming tool. In this illustrative example, compactor **604** comprises web forming surfaces **608** of roller body **603** formed of first material **618,** and cap forming surface **610** of roller body **603** formed of a second material **616** having a lower hardness than the first material. In some illustrative examples, web forming surfaces **608** are referred to as angled walls. In some illustrative examples, cap forming surface **610** is referred to as a planar surface.

Roller body **603** is rotatably mounted to rotational shaft **606.** Roller body **603** will apply pressure to a composite material to compact the composite material as roller body **603** rotates about rotational shaft **606.**

In this illustrative example, radiuses are present between web forming surfaces **608** and cap forming surface **610.** In this illustrative example, the radiuses include radius **612** and radius **614,** wherein the radiuses are formed of first material **618.** By radius **612** and radius **614** being formed of first material **618** with a greater hardness than second material 616, radius **612** and radius **614** can apply additional compaction to composite material over female radiuses in a forming tool.

In this illustrative example, compactor **604** further comprises flange forming surfaces **620.** In this illustrative example, flange forming surfaces **620** are formed of first material **618.** However, in other illustrative examples, flange forming surfaces **620** can be formed of any desired material based on a desired level of compaction.

In this illustrative example, although two materials with different durometer hardnesses are depicted, in other illustrative examples, more than two materials can be used. In some illustrative examples, compactor **604** can comprise more than two materials with different durometer hardnesses. In some illustrative examples, the material of compaction surface **607** can be tailored based on desired compaction and a cross-sectional shape of a composite material to be compacted. In some illustrative examples, first material **618** has a range of hardnesses. In some illustrative examples, second material **616** has a different range of hardnesses.

Although first material **618** and second material **616** have different hardnesses, in some illustrative examples, first material **618** and second material 616 are a same material. In some illustrative examples, first material **618** and second material **616** are a same base material with different additives to control hardnesses. In some illustrative examples, first material **618** and second material **616** are a same base material with different processing to control hardnesses. In some illustrative examples, first material **618** and second material **616** are different materials.

Second material **616** can be joined to first material **618** by any desirable method. In some illustrative examples, roller body **603** is three-dimensionally printed. In some illustrative examples, first material **618** and second material **616** are three-dimensionally printed together. In some illustrative examples, second material **616** can be joined to first material **618** by an adhesive between first material **618** and second material **616.** In some illustrative examples, second material **616** is restrained against first material **618** by friction. In some illustrative examples, mechanical connectors maintain second material **616** on first material **618.** In some illustrative examples, mechanical connectors comprise protrusions formed of first material **618** and channels in second material **616** positioned over the protrusions to secure second material **616** to first material **618.** In some illustrative examples, mechanical connectors comprise protrusions formed of second material 616 and channels in first material **618** receiving the protrusions to secure second material **616** to first material **618.**

In this illustrative example, compactor **604** is configured to compact an elongate composite member having a hat-shaped cross-section. In this illustrative example, roller body **603** of compactor **604** comprises trapezoidal cross-section **611** including web forming surfaces **608** and cap forming surface **610.**

In some illustrative examples, roller compactor **609** comprises first portion **619** of compaction surface **607** formed of first material **618,** and second portion **621** of compaction surface **607** formed of second material **616** having a lower hardness than first material **618.** Second portion **621** is configured to selectively reduce compaction pressure by second portion **621** of compaction surface **607.**

Compaction surface **607** is configured to contact a composite material during compaction. In some illustrative examples, compaction surface **607** is complementary to a cross-sectional shape of a composite member. In some illustrative examples, compaction surface **607** is complementary to a forming surface of a forming tool.

Second portion **621** is selected to reduce compaction inconsistencies in a composite material compacted by rolling roller compactor **609** over the composite material. In some illustrative examples, at least one of second material **616** or second portion **621** are selected to reduce compaction inconsistencies such as wrinkles, gaps, or bridging.

In this illustrative example, first portion **619** of compaction surface **607** comprises web forming surfaces **608,** and wherein the second portion **621** of compaction surface **607** comprises cap forming surface **610.** In some illustrative examples, a size and a shape of cap forming surface **610** are configured to reduce bridging in a composite member, such as an elongate composite member. In some illustrative examples, bridging can be reduced by providing a more compliant surface for cap forming surface **610.** In this illustrative example, radiuses are present between web forming surfaces **608** and cap forming surface **610,** wherein the radiuses are formed of first material **618.**

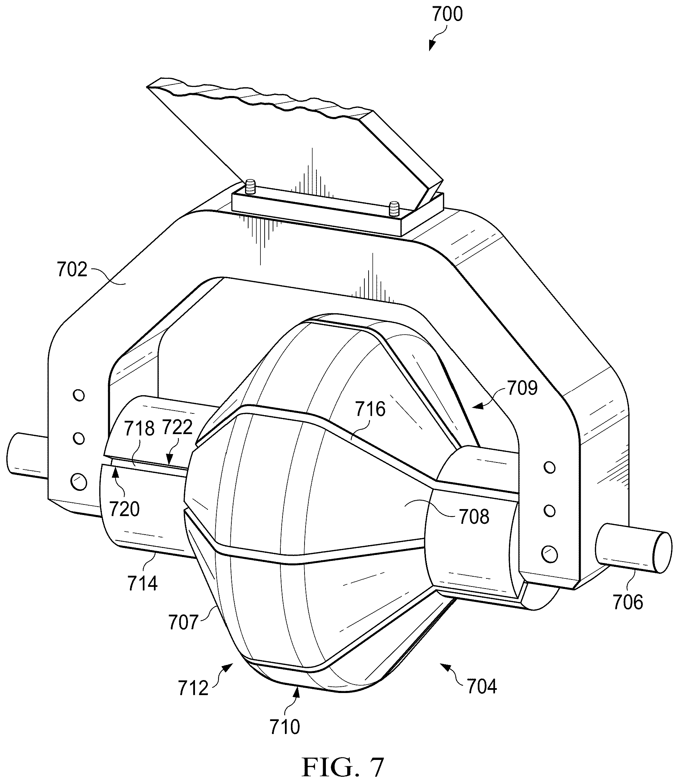

Turning now to **Figure 7****,** an illustration of an isometric view of a compactor is depicted in accordance with an illustrative example. Compactor **704** can be used to compact a composite material in manufacturing a component of aircraft **100** of **Figure 1****.** Compactor **704** is a physical implementation of compactor **204** of **Figures 2A** **and** **2B****.** Compactor **704** is a physical implementation of compactor **304** of **Figures 3A** **and** **3B****.**

In view **700,** end effector **702** comprises compactor **704.** In this illustrative example, compactor **704** is roller compactor **709.** Roller compactor **709** is rotatably mounted to rotational shaft **706.**

Roller compactor **709** comprises channels **716** and channels **718.** In some illustrative examples, at least one channel of channels **716** or channels **718** is filled or partially filled with compliant material, such as silicone. Channels **716** and channels **718** are positioned on roller compactor **709** to provide compaction relief. Channels **716** and channels **718** facilitate composite forming. Channels **716** and channels **718** facilitate composite forming with forming relief facilitated by channels **716** and channels **718.** In some illustrative examples, channels **716** and channels **718** facilitate within tolerance difference zones corresponding to channels **716** and channels **718** rather than out of tolerance wrinkles. In some illustrative examples, the within tolerance differences can be reduced through autoclave and curing processing. Variables for channels **716** and channels **718** include frequency, width, and path. In some illustrative examples, channels **718** are positioned every 45 degrees of the 360 degrees of a cross-section. In some illustrative examples, the width of channels **718** is in a range of 0.1" to 0.2".

Roller compactor **709** comprises compaction surface **707** configured to contact a composite material, and channels **716** extending across at least a portion of compaction surface **707.**

In this illustrative example, channels **716** extend continuously across web forming surfaces **708** and cap forming surface **710.** In this illustrative example, channels **716** are discontinuous on compaction surface **707.** Channels **716** are linear across compaction surface **707.** In other non-depicted examples, channels **716** can be curved or have any desirable path across compaction surface **707.** In this illustrative example, channels **716** have a frequency of approximately every 45 degrees around roller body **712.**

In this illustrative example, channels **718** extend continuously across flange forming surfaces **714.** In this illustrative example, channels **718** are discontinuous **720** on compaction surface **707.** Channels **718** are linear across compaction surface **707.** In other non-depicted examples, channels **718** can be curved or have any desirable path across compaction surface **707.** In this illustrative example, channels **718** have a frequency of approximately every 90 degrees around portion of roller compactor **709** having flange forming surfaces **714.**

In some illustrative examples, a depth of a channel is the same throughout the channel. In some illustrative examples, a depth of a channel varies along the channel. In some illustrative examples, depths of some channels are different than depths of other channels. In some illustrative examples, depths of channels **718** are configured to provide a desired compaction relief. In some illustrative examples, depths of channels **718** vary across compaction surface **707.**

In some illustrative examples, a width of a channel is the same throughout the channel. In some illustrative examples, a width of a channel, such as a channel of channels **718** or channels **716,** varies along the channel. In some illustrative examples, widths of some channels, such as a channel of channels **718** or channels **716,** are different than widths of other channels. In some illustrative examples, widths of channels **718** are configured to provide a desired compaction relief. In some illustrative examples, widths of channels **718** vary across compaction surface **707.**

As depicted, both channels **718** and channels **716** are substantially straight **722.** In other non-depicted examples, channels across compaction surface **707** can have an alternative path, such as a curved path.

As depicted, compaction surface **707** comprises cap forming surface **710,** web forming surfaces **708** opposite cap forming surface **710,** and flange forming surfaces **714** adjacent web forming surfaces **708** and wherein channels **718** extending across at least a portion of flange forming surfaces **714** have at least one of a different width, a different frequency, or a different depth than channels **716** of web forming surfaces **708.**

In this illustrative example, more than one set of channels is present. In this illustrative example, each set of channels, channels **716** and channels **718,** has a respective shape. In this illustrative example, a path for channels **716** is different for a path for channels **718.** In some illustrative examples, channels **716** have a same width and depth as channels **718.** In other illustrative examples, width and depth of channels **716** can be different from channels **718.**

In some illustrative examples, a filler material (not depicted) is present within at least one channel of channels **718.** In these illustrative examples, the filler material has a lower hardness than a first material of the compaction surface.

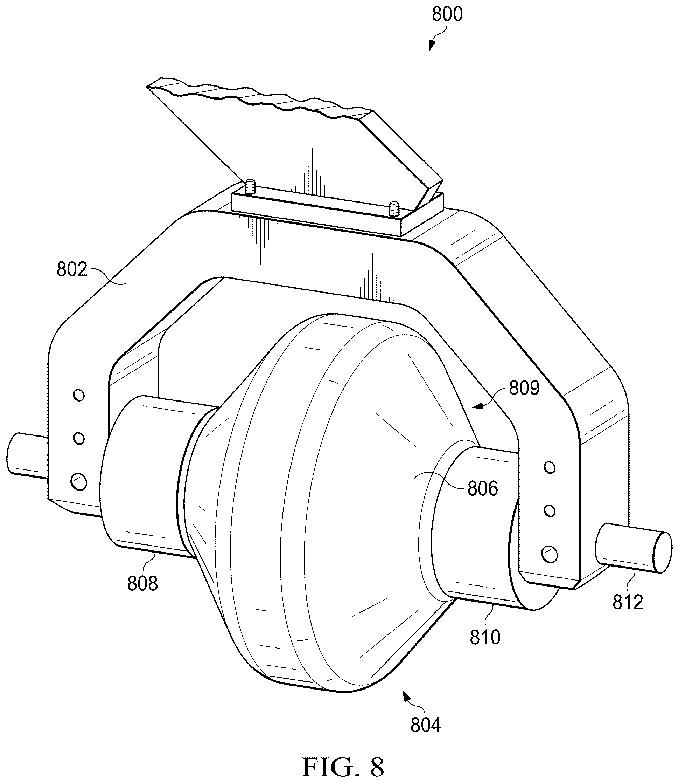

Turning now to **Figure 8****,** an illustration of an isometric view of a compactor is depicted in accordance with an illustrative example. Compactor **804** can be used to compact a composite material in manufacturing a component of aircraft **100** of **Figure 1****.** Compactor **804** is a physical implementation of compactor **204** of **Figures 2A** **and** **2B****.** Compactor **804** is a physical implementation of compactor **304** of **Figures 3A** **and** **3B****.**

In view **800,** end effector **802** comprises compactor **804.** In this illustrative example, compactor **804** is a roller compactor **809.** Roller compactor **809** comprises rotational shaft **812.** Roller body **806** of roller compactor **809** is rotatably mounted to rotational shaft **812.**

Roller compactor **809** is designed to maintain constant rotation speed at a point of contact with a composite material being compacted. Roller compactor **809** is designed to compact the composite material without undesirable levels of friction. Segmentation of roller compactor **809** to form independently movable roller segments enables larger diameter roller segments to rotate more slowly than smaller diameter roller segments. In this illustrative example, the center of roller body **806** rotates slower than smaller diameter sections, such as auxiliary roller **808.** An equation that can be used to estimate the rotation for a roller segment is V = AV * Radius (V is velocity at forming surface, AV is angular Velocity and R is radius). Velocity will be the same for all different diameters/radii.

Roller compactor **809** is passively powered through friction connection between the compaction surface and a composite material being compacted. Each independently movable roller segment has an independent stimulation during rolling. Each independently movable roller segment can have a different stimulation depending upon a design of each independently movable roller segment and direction of steering. For example, steering to the right causes a right flange roller, such as auxiliary roller **810,** to travel less distance than a left flange roller, such as auxiliary roller **808.** Bearings between the independently movable roller segments allow independent rotation of each roller segment.

In this illustrative example, roller compactor **809** is configured to compact a composite material and roller compactor **809** comprises rotational shaft **812,** roller body **806** rotatably seated on rotational shaft **812,** and auxiliary roller **808** rotatably seated on rotational shaft **812** such that auxiliary roller **808** is independently movable relative to roller body **806.** In this illustrative example, roller compactor **809** further comprises auxiliary roller **810** rotatably seated on rotational shaft **812** such that auxiliary roller **810** is independently movable relative to roller body **806.**

Roller bearings (not depicted) are present between roller body **806** and rotational shaft **812.** Roller bearings (not depicted) between roller body **806** and rotational shaft **812** enable rotation of roller body **806** around rotational shaft **812.**

Roller bearings (not depicted) are present between auxiliary roller **808** and rotational shaft **812.** Roller bearings (not depicted) between auxiliary roller **808** and rotational shaft **812** enable rotation of auxiliary roller **808** around rotational shaft **812.**

Roller bearings (not depicted) are present between auxiliary roller **810** and rotational shaft **812.** Roller bearings (not depicted) between auxiliary roller **810** and rotational shaft **812** enable rotation of auxiliary roller **810** around rotational shaft **812.**

In some illustrative examples, roller compactor **809** further comprises bearings (not depicted) between roller body **806** and auxiliary roller **808.** In some illustrative examples, roller compactor **809** further comprises bearings (not depicted) between roller body **806** and auxiliary roller **810.** In this illustrative example, roller body **806** has a first diameter and auxiliary roller **808** has a second diameter different from the first diameter. In this illustrative example, the first diameter is larger than the second diameter.

In this illustrative example, roller body **806** has a first diameter and auxiliary roller **810** has a third diameter different from the first diameter. In this illustrative example, the first diameter is larger than the third diameter.

Roller body **806** and auxiliary roller **808** are configured to have a same velocity at a forming surface and different angular velocities while maintaining compaction with desirable levels of friction. Roller body **806** and auxiliary roller **810** are configured to have a same velocity at a forming surface and different angular velocities while maintaining compaction with desirable levels of friction.

In this illustrative example, auxiliary roller **808** is cylindrical. In this illustrative example, auxiliary roller **810** is cylindrical. In this illustrative example, roller body **806** comprises a trapezoidal cross-section. In this illustrative example, roller body **806** comprises web forming surfaces and a cap forming surface. In this illustrative example, auxiliary roller **808** comprises a flange forming surface. In this illustrative example, auxiliary roller **810** comprises a flange forming surface.

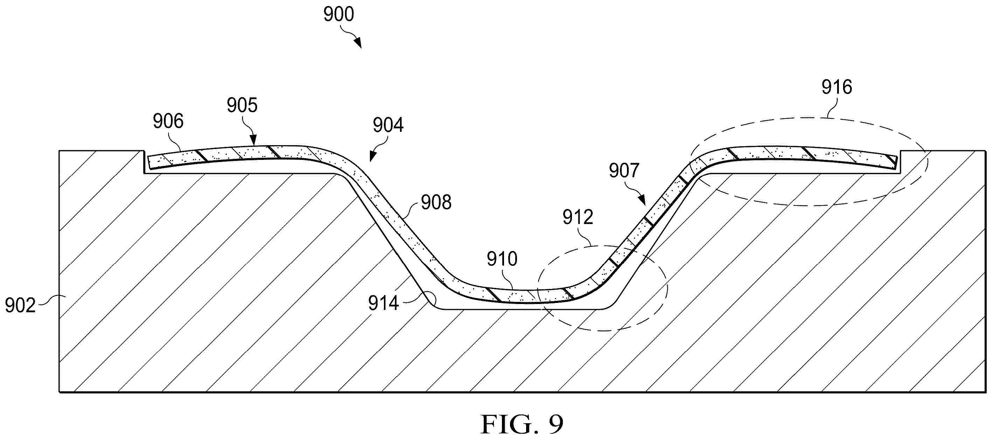

Turning now to **Figure 9****,** an illustration of a cross-sectional view of an elongate composite member that can be compacted by a compactor is depicted in accordance with an illustrative example. In view **900,** composite material **904** is shown on a forming surface of forming tool **902.** In this illustrative example, composite material **904** has not yet been compacted.

In some illustrative examples, composite material **904** can be compacted onto forming tool **902** to manufacture a component of aircraft **100** of **Figure 1****.** In some illustrative examples, composite material **904** can be an implementation of composite material **254** that can be compacted by compactor **204** of **Figures 2A** **and** **2B****.** In some illustrative examples, composite material **904** can be an implementation of composite material **347** that can be compacted by compactor **304** of **Figures 3A** **and** **3B****.** In some illustrative examples, composite material **904** can be compacted onto forming tool **902** by compactor **404** of **Figure 4****.** In some illustrative examples, composite material **904** can be compacted onto forming tool **902** by compactor **504** of **Figure 5****.** In some illustrative examples, composite material **904** can be compacted onto forming tool **902** by compactor **604** of **Figure 6****.** In some illustrative examples, composite material **904** can be compacted onto forming tool **902** by compactor **704** of **Figure 7****.** In some illustrative examples, composite material **904** can be compacted onto forming tool **902** by compactor **804** of **Figure 8****.**

In view **900,** composite material **904** is present on forming tool **902.** In this illustrative example, forming tool **902** comprises a cavity to receive and form composite material **904** against an inner mold line.

Elongate composite member **905** has trapezoidal cross-sectional shape **907.** In this illustrative example, elongate composite member **905** has flanges **906,** webs **908,** and cap **910.** In this illustrative example, composite material **904** of elongate composite member **905** is not fully in contact with forming tool **902.** In this illustrative example, gaps **916** are present in region of flanges **906.** In this illustrative example, bridging **912** is present in radiuses **914** of forming tool **902.**

Compaction pressure for compaction of composite material **904** can be tailored to apply desired levels of compaction into radiuses **914** to reduce or eliminate bridging **912.** Compaction pressure for compaction of composite material **904** can be tailored to apply desired levels of compaction to flanges **906** to reduce or eliminate gaps **916.** The roller compactors of the illustrative examples can be used to reduce or eliminate at least one of bridging **912** or gaps **916.** The roller compactors of the illustrative examples can compact composite material **904** against forming tool **902** while not introducing further inconsistencies. The roller compactors of the illustrative examples can compact composite material **904** against forming tool **902** with minimal or no introduction of wrinkles.

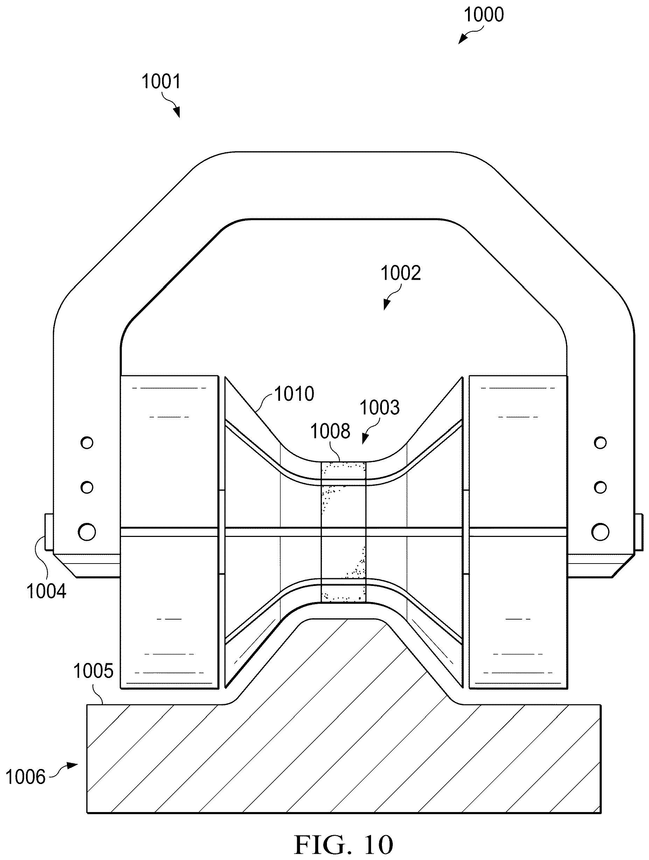

Turning now to **Figure 10****,** an illustration of a simplified side view of a compactor is depicted in accordance with an illustrative example. Compactor **1002** can be used to compact a composite material in manufacturing a component of aircraft **100** of **Figure 1****.** Compactor **1002** is a physical implementation of compactor **204** of **Figures 2A** **and** **2B****.** Compactor **1002** is a physical implementation of compactor **304** of **Figures 3A** **and** **3B****.**

In view **1000,** end effector **1001** comprises compactor **1002.** In this illustrative example, compactor **1002** is a roller compactor. Compactor **1002** comprises rotational shaft **1004.** Compactor **1002** comprises cross-sectional shape **1003** configured to complement forming surface **1005** of forming tool **1006.** In this illustrative example, cross-sectional shape **1003** is formed by first portion **1008** having a smaller diameter than second portion **1010** of compactor **1002.** In this illustrative example, the center of compactor **1002** has a smaller diameter than the outer portions of compactor **1002.**

Compactor **1002** comprises an desirable design choices for improving compaction quality for a composite material. In this illustrative example, first portion **1008** is formed of a first material while second portion **1010** is formed of a second material. In some illustrative examples, channels are present in compactor **1002.** In some illustrative examples, compactor **1002** comprises a plurality of independently movable roller segments.

In this illustrative example, compactor **1002** is configured to compact a composite member on a convex portion of forming surface **1005.** However, a compactor of the illustrative examples can have any desirable cross-sectional shape configured to complement a forming surface of a respective forming tool. A roller compactor can comprise any desirable cross-section configured to compact a cross-sectional shape of a composite member. In some illustrative examples, a compactor can have any desirable combination of at least one of angled portions, planar portions, or curved portions. In some illustrative examples, a compactor can have any desirable quantity of roller segments. In some illustrative examples, a compactor comprises any desirable materials.

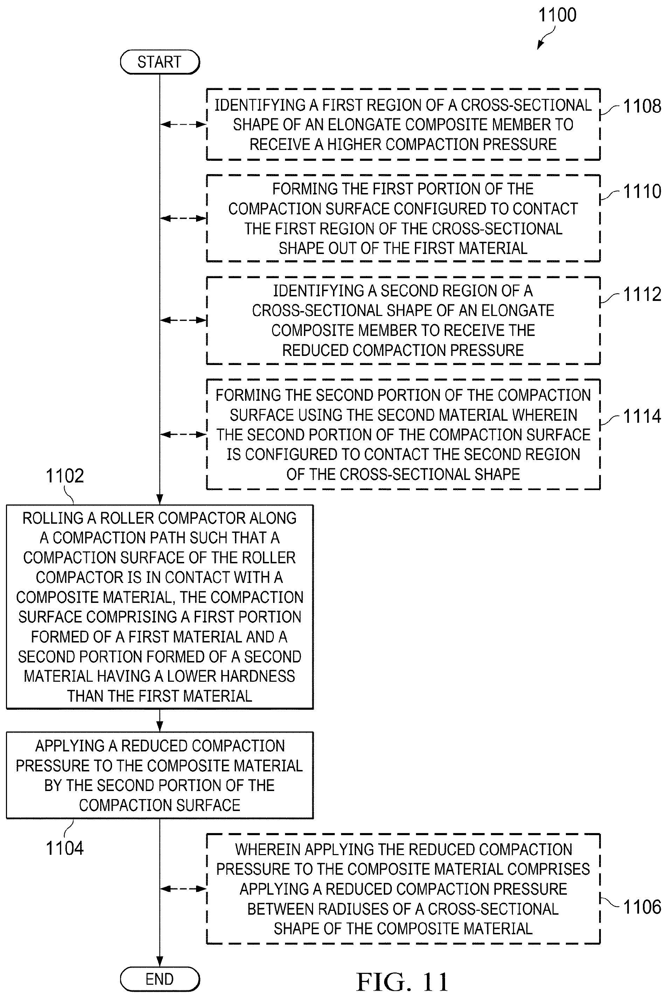

Turning now to **Figure 11****,** a flowchart of a method of compacting a composite material is depicted in accordance with an illustrative example. Method **1100** can be performed to form a composite stiffener of aircraft **100 of** **Figure 1****.** Method **1100** can be performed using roller compactor **206** of **Figures 2A** **and** **2B****.** Method **1100** can be performed using roller compactor **306 of** **Figures 3A** **and** **3B****.** Method **1100** can be performed using compactor **404 of** **Figure 4****.** Method **1100** can be performed using compactor **504 of** **Figure 5****.** Method **1100** can be performed using compactor **604** of **Figure 6****.** Method **1100** can be performed to compact composite material **904** of **Figure 9****.** Method **1100** can be performed using compactor **1002 of** **Figure 10****.**

Method **1100** rolls a roller compactor along a compaction path such that a compaction surface of the roller compactor is in contact with a composite material, the compaction surface comprising a first portion formed of a first material and a second portion formed of a second material having a lower hardness than the first material (operation **1102).** Method **1100** applies a reduced compaction pressure to the composite material by the second portion of the compaction surface (operation **1104).** Afterwards, method **1100** terminates.

In some illustrative examples, applying the reduced compaction pressure to the composite material comprises applying a reduced compaction pressure between radiuses of a cross-sectional shape of the composite material (operation **1106).** In some illustrative examples, by applying reduced compaction pressure between the radiuses, the composite material in the radiuses is compacted sufficiently with reduced or eliminated inconsistencies such as bridging. In some illustrative examples, by applying reduced compaction pressure between the radiuses, the composite material in the radiuses receives sufficient compaction pressure for pushing composite material into the radiuses.

In some illustrative examples, method **1100** identifies a first region of a cross-sectional shape of an elongate composite member to receive a higher compaction pressure (operation **1108).** In some illustrative examples, method **1100** forms the first portion of the compaction surface configured to contact the first region of the cross-sectional shape out of the first material (operation **1110).**

In some illustrative examples, method **1100** identifies a second region of a cross-sectional shape of an elongate composite member to receive the reduced compaction pressure (operation **1112).** In some illustrative examples, method **1100** forms the second portion of the compaction surface using the second material wherein the second portion of the compaction surface is configured to contact the second region of the cross-sectional shape (operation **1114).** In some illustrative examples, the second material is referred to as a compliant material. In some illustrative examples, the compliant material is a second portion of the compaction surface configured to apply a lower compaction force to the second region. In these illustrative examples, a first portion has a greater compaction force to sufficiently compact a portion of the composite material.

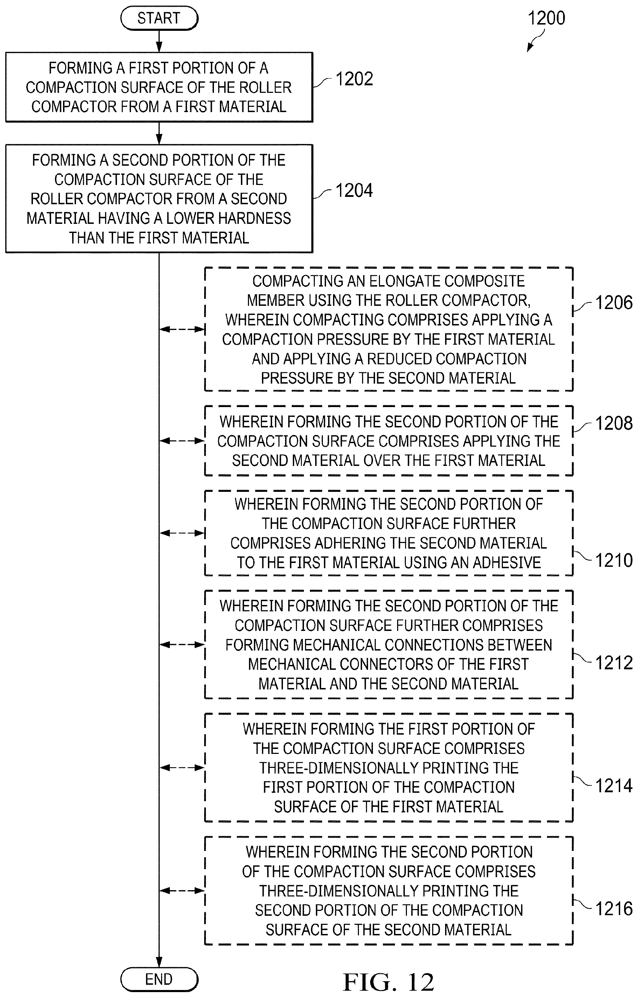

Turning now to **Figure 12****,** a flowchart of a method of controlling compaction pressure of a roller compactor is depicted in accordance with an illustrative example. Method **1200** can be performed to form a roller compactor for compacting a composite stiffener of aircraft **100** of **Figure 1****.** Method **1200** can be performed to form roller compactor **206** of **Figures 2A** **and** **2B****.** Method **1200** can be performed to form roller compactor **306** of **Figures 3A** **and** **3B****.** Method **1200** can be performed to form compactor **404** of **Figure 4****.** Method **1200** can be performed to form compactor **504** of **Figure 5****.** Method **1200** can be performed to form compactor **604** of **Figure 6****.** Method **1200** can be performed to form a roller compactor to compact composite material **904** of **Figure 9****.** Method **1200** can be performed using compactor **1002** of **Figure 10****.**

Method **1200** forms a first portion of a compaction surface of the roller compactor from a first material (operation **1202).** Method **1200** forms a second portion of the compaction surface of the roller compactor from a second material having a lower hardness than the first material (operation **1204).** Afterwards, method **1200** terminates.

In some illustrative examples, method **1200** compacts an elongate composite member using the roller compactor, wherein compacting comprises applying a compaction pressure by the first material and applying a reduced compaction pressure by the second material (operation **1206).** In some illustrative examples, the second material applies reduced compaction pressure in comparison to the first material based on the increased compliance of the second material in comparison to the first material.

In some illustrative examples, forming the second portion of the compaction surface comprises applying the second material over the first material (operation **1208).** In some illustrative examples, friction between the first material and the second material maintains the second material on the first material. In some illustrative examples, forming the second portion of the compaction surface further comprises adhering the second material to the first material using an adhesive (operation **1210).**

In some illustrative examples, forming the second portion of the compaction surface further comprises forming mechanical connections between mechanical connectors of the first material and the second material (operation **1212).** In some illustrative examples, the mechanical connectors comprise protrusions and internal channels.

In some illustrative examples, forming the first portion of the compaction surface comprises three-dimensionally printing the first portion of the compaction surface of the first material (operation **1214),** and wherein forming the second portion of the compaction surface comprises three-dimensionally printing the second portion of the compaction surface of the second material (operation **1216).** In some illustrative examples, the second material is three-dimensionally printed separately from the first material. In some illustrative examples, the second material can be adhered to the first material after three-dimensionally printing the second portion.

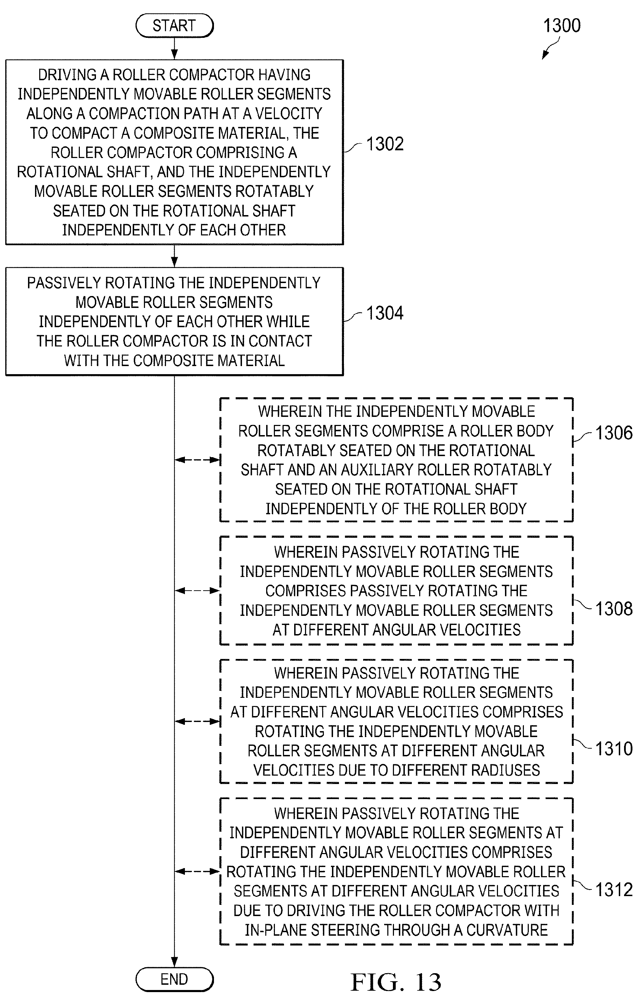

Turning now to **Figure 13****,** a flowchart of a method of compacting a composite material is depicted in accordance with an illustrative example. Method **1300** can be performed to form a roller compactor for compacting a composite stiffener of aircraft **100** of **Figure 1****.** Method **1300** can be performed to form roller compactor **206** of **Figures 2A** **and** **2B****.** Method **1300** can be performed to form roller compactor **306** of **Figures 3A** **and** **3B****.** Method **1300** can be performed to form compactor **404** of **Figure 4****.** Method **1300** can be performed to form compactor **504** of **Figure 5****.** Method **1300** can be performed to form compactor **804** of **Figure 8****.** Method **1300** can be performed to form a roller compactor to compact composite material **904** of **Figure 9****.**

Method **1300** drives a roller compactor having independently movable roller segments along a compaction path at a velocity to compact a composite material, the roller compactor comprising a rotational shaft, and the independently movable roller segments rotatably seated on the rotational shaft independently of each other (operation **1302).** Method **1300** passively rotates the independently movable roller segments independently of each other while the roller compactor is in contact with the composite material (operation **1304).** Afterwards, method **1300** terminates.

In some illustrative examples, the independently movable roller segments comprise a roller body rotatably seated on the rotational shaft and an auxiliary roller rotatably seated on the rotational shaft independently of the roller body (operation **1306).** In some illustrative examples, the independently movable roller segments further comprise a second auxiliary roller, wherein the roller body is positioned between the auxiliary rollers. In some illustrative examples, the auxiliary rollers comprise flange forming surfaces.

In some illustrative examples, passively rotating the independently movable roller segments comprises passively rotating the independently movable roller segments at different angular velocities (operation **1308).** In some illustrative examples, passively rotating the independently movable roller segments at different angular velocities comprises rotating the independently movable roller segments at different angular velocities due to different radiuses (operation **1310).** In some illustrative examples, roller segments with smaller radiuses have higher angular velocities.

In some illustrative examples, passively rotating the independently movable roller segments at different angular velocities comprises rotating the independently movable roller segments at different angular velocities due to driving the roller compactor with in-plane steering through a curvature (operation **1312).** In some illustrative examples, roller segments of the independently movable roller segments in the direction of the curvature have a lower angular velocity.

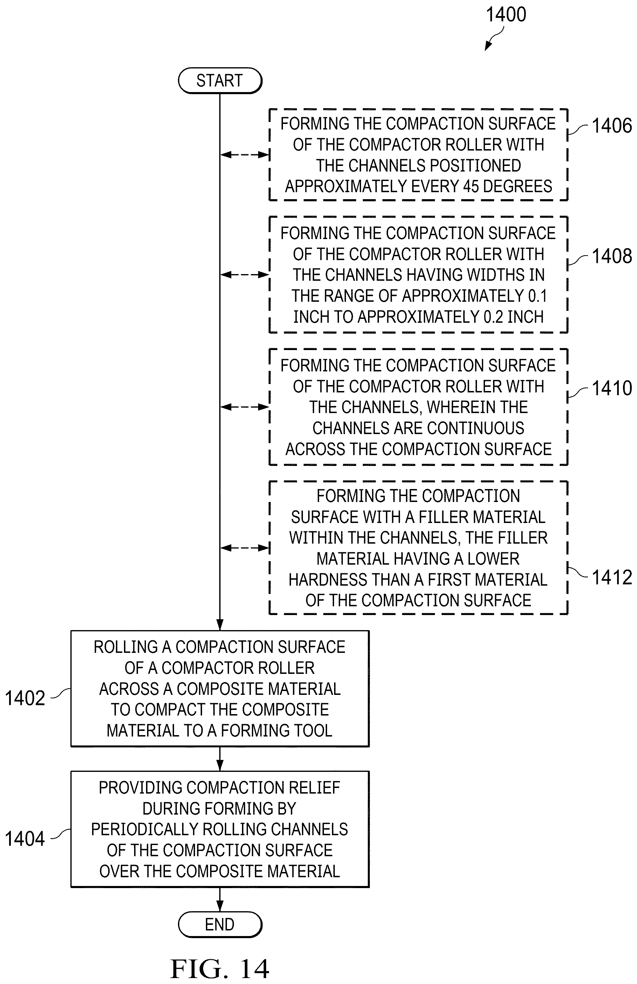

Turning now to **Figure 14****,** a flowchart of a method of compacting a composite material is depicted in accordance with an illustrative example. Method **1400** can be performed to form a roller compactor for compacting a composite stiffener of aircraft **100** of **Figure 1****.** Method **1400** can be performed to form roller compactor **206** of **Figures 2A** **and** **2B****.** Method **1400** can be performed to form roller compactor **306** of **Figures 3A** **and** **3B****.** Method **1400** can be performed to form compactor **404** of **Figure 4****.** Method **1400** can be performed to form compactor **504** of **Figure 5****.** Method **1400** can be performed to form compactor **704** of **Figure 7****.** Method **1400** can be performed to form a roller compactor to compact composite material **904** of **Figure 9****.**

Method **1400** rolls a compaction surface of a roller compactor across a composite material to compact the composite material to a forming tool (operation **1402).** Method **1400** provides compaction relief during forming by periodically rolling channels of the compaction surface over the composite material (operation **1404).** Afterwards, method **1400** terminates.

In some illustrative examples, method **1400** forms the compaction surface of the roller compactor with the channels positioned approximately every 45 degrees (operation **1406).** In some illustrative examples, the channels are positioned approximately every 90 degrees. In some illustrative examples, the frequency of channels is configured to provide desired relief for the composite material.

In some illustrative examples, method **1400** forms the compaction surface of the roller compactor with the channels having widths in the range of approximately 2.54 mm (0.1 inch) to approximately 5.08 mm (0.2 inch) (operation **1408).** In some illustrative examples, each channel has a substantially constant width. In some illustrative examples, at least one channel has a variable width. In some illustrative examples, each channel has the same width. In some illustrative examples, channels of different widths are present in the compaction surface.

In some illustrative examples, method **1400** forms the compaction surface of the roller compactor with the channels, wherein the channels are continuous across the compaction surface (operation **1410).** In some illustrative examples, the channels extend continuously across the compaction surface in a direction parallel to a rotational axis of the compaction surface. In some illustrative examples, the channels extend continuously across the compaction surface from a first edge to a second edge. In other illustrative examples, at least one channel is discontinuous on the compaction surface. In other illustrative examples, at least one channel extends partially from one edge into the compaction surface and terminates prior to reaching an opposite edge of the compaction surface.

In some illustrative examples, method **1400** forms the compaction surface with a filler material within the channels, the filler material having a lower hardness than a first material of the compaction surface (operation **1412).** In some illustrative examples, the filler material completely fills the channels. In some illustrative examples, filler material only partially fills the channels. In some illustrative examples, the filler material is a polymeric material. In some illustrative examples, the filler material is silicone.

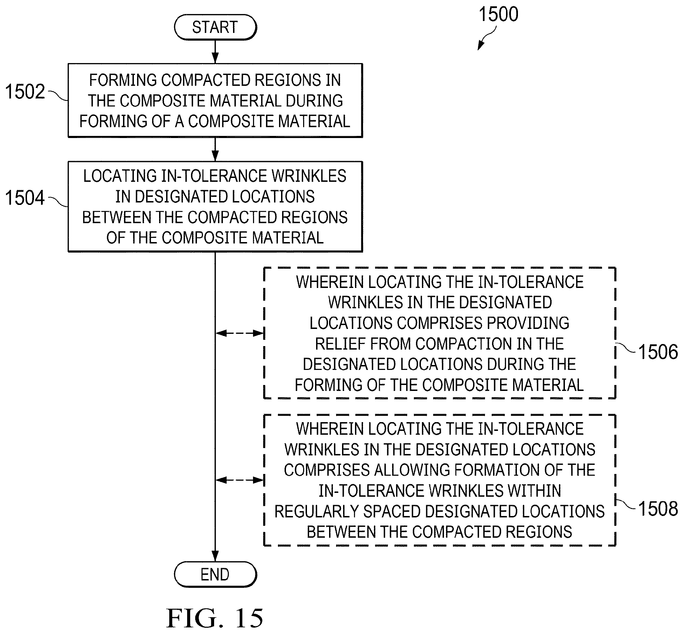

Turning now to **Figure 15****,** a flowchart of a method of selectively forming wrinkles in a composite material during forming is depicted in accordance with an illustrative example. Method **1500** can be performed to compact a composite structure of aircraft **100** of **Figure 1****.** Method **1500** can be performed to compact composite material **254** of **Figures 2A** **and** **2B****..** Method **1500** can be performed to compact composite material **347** of **Figures 3A** **and** **3B****.** In some illustrative examples, method **1500** can be performed using compactor **404** of **Figure 4****.** Method **1500** can be performed using compactor **504** of **Figure 5****.** Method **1500** can be performed using compactor **704** of **Figure 7****.** Method **1500** can be performed to compact composite material **904** of **Figure 9****.** Method **1500** can be performed using compactor **1002** of **Figure 10****.**

Method **1500** forms compacted regions in the composite material during forming of a composite material (operation **1502).** Method **1500** locates in-tolerance wrinkles in designated locations between the compacted regions of the composite material (operation **1504).** Afterwards, method **1500** terminates.

In some illustrative examples, locating the in-tolerance wrinkles in the designated locations comprises providing relief from compaction in the designated locations during the forming of the composite material (operation **1506).** In some illustrative examples, locating the in-tolerance wrinkles in the designated locations comprises allowing formation of the in-tolerance wrinkles within regularly spaced designated locations between the compacted regions (operation **1508).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional.

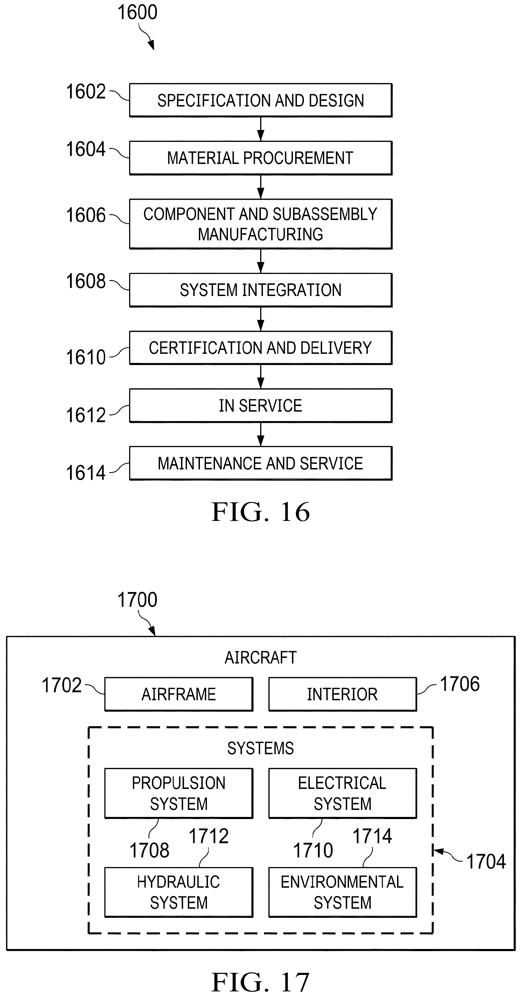

Illustrative examples of the present disclosure may be described in the context of aircraft manufacturing and service method **1600** as shown in **Figure 16** and aircraft **1700** as shown in **Figure 17****.** Turning first to **Figure 16****,** an illustration of an aircraft manufacturing and service method in a form of a block diagram is depicted in accordance with an illustrative example. During pre-production, aircraft manufacturing and service method **1600** may include specification and design **1602** of aircraft **1700 in** **Figure 17** and material procurement **1604.**

During production, component and subassembly manufacturing **1606** and system integration **1608** of aircraft **1700** takes place. Thereafter, aircraft **1700** may go through certification and delivery **1610** in order to be placed in service **1612.** While in service **1612** by a customer, aircraft **1700** is scheduled for routine maintenance and service **1614,** which may include modification, reconfiguration, refurbishment, or other maintenance and service.

Each of the processes of aircraft manufacturing and service method **1600** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 17****,** an illustration of an aircraft in a form of a block diagram is depicted in which an illustrative example may be implemented. In this example, aircraft **1700** is produced by aircraft manufacturing and service method **1600** of **Figure 16** and may include airframe **1702** with plurality of systems **1704** and interior **1706.** Examples of systems **1704** include one or more of propulsion system **1708,** electrical system **1710,** hydraulic system **1712,** and environmental system **1714.** Any number of other systems may be included.

Apparatuses and methods embodied herein may be employed during at least one of the stages of aircraft manufacturing and service method **1600.** One or more illustrative examples may be manufactured or used during at least one of component and subassembly manufacturing **1606,** system integration **1608,** in service **1612,** or maintenance and service **1614** of **Figure 16****.**

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

The disclosure further comprises the following clauses:
1. A roller compactor comprising:
   a first portion of a compaction surface formed of a first material; and
   a second portion of the compaction surface formed of a second material having a lower hardness than the first material, wherein the second portion is configured to selectively reduce compaction pressure by the second portion of the compaction surface.
2. The roller compactor of clause 1, wherein the compaction surface is complementary to a cross-sectional shape of a composite member.
3. The roller compactor of clause 2, wherein the compaction surface is complementary to a forming surface of a forming tool.
4. The roller compactor of clause 1, wherein the second portion is selected to reduce compaction inconsistencies in a composite material compacted by rolling the roller compactor over the composite material.
5. The roller compactor of clause 4, wherein the second portion is selected to locally relax compaction outside of a concave radius of a cross-sectional shape of the composite material to intensify compaction in the concave radius.
6. The roller compactor of clause 1, wherein the first portion of the compaction surface comprises web forming surfaces, and wherein the second portion of the compaction surface comprises a cap forming surface.
7. The roller compactor of clause 6, wherein a size and a shape of the cap forming surface are configured to reduce bridging in an elongate composite member.
8. The roller compactor of clause 6, wherein a roller body comprises a trapezoidal cross-sectional shape including the web forming surfaces and the cap forming surface.
9. The roller compactor of clause 6 further comprising:
   radiuses between the web forming surfaces and the cap forming surface, wherein the radiuses are formed of the first material.
10. The roller compactor of clause 1 further comprising adhesive between the first material and the second material.
11. The roller compactor of clause 1, wherein the second material is restrained against the first material by friction.
12. The roller compactor of clause 1 further comprising:
   protrusions formed of the first material; and
   channels in the second material positioned over the protrusions to secure the second material to the first material.
13. The roller compactor of clause 1, wherein the first material and the second material are configured to provide sufficient friction with a composite material being compacted to passively roll the roller compactor about a rotational shaft.
14. A method of compacting a composite material comprising:
   rolling a roller compactor along a compaction path such that a compaction surface of the roller compactor is in contact with a composite material, the compaction surface comprising a first portion formed of a first material and a second portion formed of a second material having a lower hardness than the first material; and
   applying a reduced compaction pressure to the composite material by the second portion of the compaction surface.
15. The method of clause 14, wherein applying the reduced compaction pressure to the composite material comprises applying a reduced compaction pressure between radiuses of a cross-sectional shape of the composite material.
16. The method of clause 14 further comprising:
   identifying a first region of a cross-sectional shape of an elongate composite member to receive a higher compaction pressure; and
   forming the first portion of the compaction surface configured to contact the first region of the cross-sectional shape out of the first material.
17. The method of clause 14 further comprising:
   identifying a second region of a cross-sectional shape of an elongate composite member to receive the reduced compaction pressure; and
   forming the second portion of the compaction surface using the second material wherein the second portion of the compaction surface is configured to contact the second region of the cross-section.
18. A method of controlling compaction pressure of a roller compactor comprising:
   forming a first portion of a compaction surface of the roller compactor from a first material; and
   forming a second portion of the compaction surface of the roller compactor from a second material having a lower hardness than the first material.
19. The method of clause 18 further comprising:
   compacting an elongate composite member using the roller compactor, wherein compacting comprises applying a compaction pressure by the first material and applying a reduced compaction pressure by the second material.
20. The method of clause 18, wherein forming the second portion of the compaction surface comprises applying the second material over the first material.
21. The method of clause 20, wherein forming the second portion of the compaction surface further comprises adhering the second material to the first material using an adhesive.
22. The method of clause 20, wherein forming the second portion of the compaction surface further comprises forming mechanical connections between mechanical connectors of the first material and the second material.
23. The method of clause 18, wherein forming the first portion of the compaction surface comprises three-dimensionally printing the first portion of the compaction surface of the first material, and wherein forming the second portion of the compaction surface comprises three-dimensionally printing the second portion of the compaction surface of the second material.

## Claims

1. A roller compactor comprising:
a first portion of a compaction surface formed of a first material; and
a second portion of the compaction surface formed of a second material having a lower hardness than the first material, wherein the second portion is configured to selectively reduce compaction pressure by the second portion of the compaction surface.

2. The roller compactor of claim 1, wherein the compaction surface is complementary to a cross-sectional shape of a composite member, wherein the compaction surface is preferably complementary to a forming surface of a forming tool.

3. The roller compactor of claim 1 or 2, wherein the second portion is selected to reduce compaction inconsistencies in a composite material compacted by rolling the roller compactor over the composite material, wherein the second portion is preferably selected to locally relax compaction outside of a concave radius of a cross-sectional shape of the composite material to intensify compaction in the concave radius.

4. The roller compactor of any one of the preceding claims, wherein the first portion of the compaction surface comprises web forming surfaces, and wherein the second portion of the compaction surface comprises a cap forming surface.

5. The roller compactor of claim 4, wherein a size and a shape of the cap forming surface are configured to reduce bridging in an elongate composite member and/or wherein a roller body comprises a trapezoidal cross-sectional shape including the web forming surfaces and the cap forming surface.

6. The roller compactor of claim 4 or 5, further comprising:
radiuses between the web forming surfaces and the cap forming surface, wherein the radiuses are formed of the first material.

7. The roller compactor of any one of the preceding claims, further comprising adhesive between the first material and the second material and/or wherein the second material is restrained against the first material by friction.

8. The roller compactor of any one of the preceding claims, further comprising:
protrusions formed of the first material; and
channels in the second material positioned over the protrusions to secure the second material to the first material.

9. The roller compactor of any one of the preceding claims, wherein the first material and the second material are configured to provide sufficient friction with a composite material being compacted to passively roll the roller compactor about a rotational shaft.

10. A method of compacting a composite material comprising:
rolling a roller compactor along a compaction path such that a compaction surface of the roller compactor is in contact with a composite material, the compaction surface comprising a first portion formed of a first material and a second portion formed of a second material having a lower hardness than the first material; and
applying a reduced compaction pressure to the composite material by the second portion of the compaction surface.

11. The method of claim 10, wherein applying the reduced compaction pressure to the composite material comprises applying a reduced compaction pressure between radiuses of a cross-sectional shape of the composite material and/or further comprising:
identifying a first region of a cross-sectional shape of an elongate composite member to receive a higher compaction pressure; and
forming the first portion of the compaction surface configured to contact the first region of the cross-sectional shape out of the first material.

12. The method of claim 10 or 11, further comprising:
identifying a second region of a cross-sectional shape of an elongate composite member to receive the reduced compaction pressure; and
forming the second portion of the compaction surface using the second material wherein the second portion of the compaction surface is configured to contact the second region of the cross-section.

13. A method of controlling compaction pressure of a roller compactor comprising:
forming a first portion of a compaction surface of the roller compactor from a first material; and
forming a second portion of the compaction surface of the roller compactor from a second material having a lower hardness than the first material.

14. The method of claim 13, further comprising:
compacting an elongate composite member using the roller compactor, wherein compacting comprises applying a compaction pressure by the first material and applying a reduced compaction pressure by the second material and/or wherein forming the second portion of the compaction surface comprises applying the second material over the first material, wherein forming the second portion of the compaction surface further preferably comprises adhering the second material to the first material using an adhesive and/or wherein forming the second portion of the compaction surface further comprises forming mechanical connections between mechanical connectors of the first material and the second material.

15. The method of claim 13 or 14, wherein forming the first portion of the compaction surface comprises three-dimensionally printing the first portion of the compaction surface of the first material, and wherein forming the second portion of the compaction surface comprises three-dimensionally printing the second portion of the compaction surface of the second material.
